# EUROPEAN PATENT APPLICATION

(11) **EP 4 845 241 A1**
(43) Date of publication of application: **25.11.2026**
(21) Application number: 24923330.5
(22) Date of filing: 24.09.2024
(51) Int. Cl.: H04W 52/02

(54) **INFORMATION SENDING METHOD**

(30) Priority: 07.02.2024 CN 202410175173
(71) Applicant: ZTE CORPORATION, Shenzhen, Guangdong 518057 (CN)
(72) Inventor: LIU, Kun, Shenzhen, Guangdong 518057 (CN); DAI, Bo, Shenzhen, Guangdong 518057 (CN); HU, Youjun, Shenzhen, Guangdong 518057 (CN); XU, Jun, Shenzhen, Guangdong 518057 (CN); CHEN, Mengzhu, Shenzhen, Guangdong 518057 (CN); YANG, Weiwei, Shenzhen, Guangdong 518057 (CN); GUO, Qiujin, Shenzhen, Guangdong 518057 (CN)
(74) Representative: Deambrogi, Edgardo
(86) International application number: PCT/CN2024/120821
(87) International publication number: WO 2025/167125

(57) **Abstract**

Provided is an information sending method. The method includes: sending a target signal carrying target information, where the target signal occupies a plurality of target symbols in a time domain. The embodiments of the present disclosure may achieve, based on a low-power wake-up mechanism, data transmission in real time when a main receiver is in a deep sleep state, solving the problem in the related art of a Low Power Wake-up signal (LP-WUS) carrying information, thereby further reducing power consumption of a terminal.

## Description

### Cross-Reference to Related Application

The present disclosure is based upon and claims priority to Chinese Patent Application No. CN202410175173.0 filed on February 7, 2024 and entitled "Information Sending Method", the disclosure of which is hereby incorporated by reference in its entirety.

### Technical Field

The present disclosure relates to the field of communications, and specifically to an information sending method.

### Background

In 5G systems, in addition to latency, reliability, and availability, the energy efficiency of User Equipment (UE) is also critical. Currently, the UE needs to be charged weekly or daily according to personal usage time. Generally, the UE consumes tens of milliwatts of power in a Radio Resource Control (RRC) idle/inactive state and hundreds of milliwatts in an RRC connected state. Designing to extend the endurance time of a battery is essential for improving energy efficiency and user experience.

Power consumption depends on the length of a configured wake-up cycle, such as a paging cycle. In order to meet requirements for the endurance time of the battery, a high-cost Extended Discontinuous Reception (eDRX) cycle is expected to be used, resulting in high latency, thus making it unsuitable for service types that require both long endurance time of the battery and low latency. Therefore, introduction of a Low Power Wake-up signal (LP-WUS) mechanism is taken into consideration, that is, the UE uses an individual receiver to receive an LP-WUS, and wakes up a main radio through the LP-WUS for data transmission and data receiving; and when the UE does not detect the LP-WUS, the main receiver is in a deep sleep state, and the power consumption of the UE is further reduced in this manner. However, there is currently no solution for determining how to carry information in an LP-WUS.

To sum up, how to carry information in an LP-WUS becomes a technical problem urgently to be solved.

### Summary

Embodiments of the present disclosure provide an information sending method, so as to at least solve the problem in the related art of carrying information in an LP-WUS.

According to an embodiment of the present disclosure, an information sending method is provided and includes: a target signal carrying target information is sent, where the target signal occupies a plurality of target symbols in a time domain.

According to still another embodiment of the present disclosure, a computer-readable storage medium is further provided. The storage medium stores a computer program. The computer program, when run by a processor, performs steps of any one of the above method embodiments.

According to still embodiment of the present disclosure, an electronic apparatus is further provided and includes a memory and a processor. The memory stores a computer program. The processor is configured to run the computer program to performs step of any one of the above method embodiments.

According to another embodiment of the present disclosure, a computer program product is further provided and includes a computer program. The computer program, when run by a processor, performs steps of any one of the above method embodiments.

### Brief Description of the Drawings

Fig. 1 is a flowchart of an information sending method according to embodiments of the present disclosure.
Fig. 2 is a flowchart I of a method for generating an MC-OOK based LP-WUS according to embodiments of the present disclosure.
Fig. 3 is a flowchart II of a method for generating an MC-OOK based LP-WUS according to embodiments of the present disclosure.
Fig. 4 is a flowchart III of a method for generating an MC-OOK based LP-WUS according to embodiments of the present disclosure.
Fig. 5 is a schematic diagram I of 4 OOK symbols carrying 8-bit information according to embodiments of the present disclosure.
Fig. 6 is a schematic diagram I of 8 OOK symbols carrying 8-bit information according to embodiments of the present disclosure.
Fig. 7 is a schematic diagram II of 8 OOK symbols carrying 8-bit information according to embodiments of the present disclosure.
Fig. 8 is a schematic diagram III of 8 OOK symbols carrying 8-bit information according to embodiments of the present disclosure.
Fig. 9 is a schematic diagram IV of 8 OOK symbols carrying 8-bit information according to embodiments of the present disclosure.
Fig. 10 is a schematic diagram V of 8 OOK symbols carrying 8-bit information according to embodiments of the present disclosure.
Fig. 11 is a schematic diagram VI of 8 OOK symbols carrying 8-bit information according to embodiments of the present disclosure.
Fig. 12 is a schematic diagram II of 4 OOK symbols carrying 8-bit information according to embodiments of the present disclosure.
Fig. 13 is a schematic diagram of a manner of sending target information including indication information according to embodiments of the present disclosure.

### Detailed Description of the Embodiments

The embodiments of the present disclosure are described below in detail with reference to the drawings and the embodiments.

It is to be noted that terms "first", "second" and the like in the description, claims and the above mentioned drawings of the present disclosure are used for distinguishing similar objects rather than describing a specific sequence or a precedence order.

Method embodiments provided in the embodiments of the present disclosure may be implemented based on an LP-WUS mechanism in a 5G system. A Wake-Up Signal (WUS) is an important energy-saving mechanism. By sending the WUS, a UE, when entering any of an idle (RRC_IDLE) mode, an inactive (RRC_INACTIVE) mode, a connected (RRC_CONNECTED) mode, detects the WUS before a UE paging message is received, causing the UE to activate a receiver to receive the paging message, thereby preventing the UE from consuming a significant amount of power caused by detection of paging messages by the UE when there are no paging messages of the UE. Meanwhile, when in the connected (RRC_CONNECTED) mode, the UE may also determine, by detecting the WUS, whether a scheduling request is received, and after the UE detects the WUS, the UE activates the receiver to receive Physical Downlink Control Channel (PDCCH) information, thereby avoiding consumption of a significant amount of power caused by detection of a PDCCH by the UE when there is no scheduling information of the UE.

The method embodiments provided in the embodiments of the present disclosure may be performed in a mobile terminal, a computer terminal or a similar computing apparatus, or may also applied to a communication node such as a base station, etc.

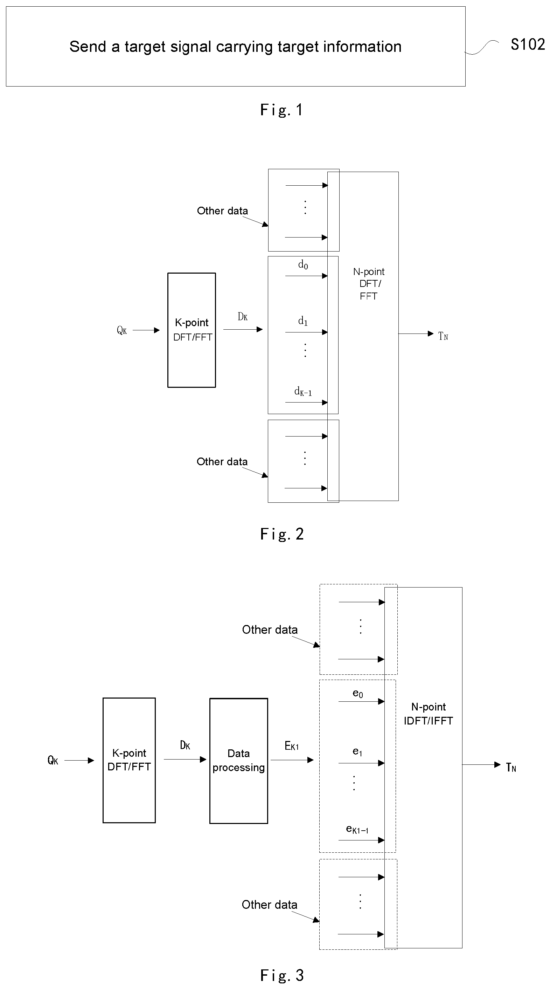

An embodiment of the present disclosure provides an information sending method. Fig. 1 is a flowchart of an information sending method according to embodiments of the present disclosure. As shown in Fig. 1, the flow includes the following steps.

At S102, a target signal carrying target information is sent, where the target signal occupies at least one target symbol in a time domain.

In this embodiment, the target signal may be generated based on modulation manners such as On-Off Keying (OOK) modulation, Multi-Carrier On-Off Keying (MC-OOK) modulation, etc., and the present disclosure is not limited thereto.

In some embodiments, the target symbol includes at least one of the following: an OOK symbol, an MC-OOK symbol, a Frequency-Shift Keying (FSK) symbol, a Multi-Carrier Frequency-Shift Keying (MC-FSK) symbol, or an Orthogonal Frequency Division Multiplexing (OFDM) symbol.

In an exemplary embodiment, the target information may be carried by the OOK symbol or MC-OOK symbol, or may also be carried by the OFDM symbol. Each OFDM symbol may be divided into one or more OOK symbols or MC-OOK symbols.

In some embodiments, the target information includes at least one of the following: first-type information; second-type information, where the second-type information refers to a portion of information in the first-type information; third-type information, where the third-type information refers to a portion of information in the first-type information that is different from the second-type information; fourth-type information, where the fourth-type information refers to information different from the first-type information; or first indication information.

In this embodiment, the first-type information includes at least one of the following: information for a first sequence, information for a second sequence, or WUS information. Exemplarily, types of the first sequence and second sequence may include a ZC sequence, an M sequence, a PN sequence, or other sequences, and the present disclosure is not limited thereto. The first sequence and the second sequence may be sequences of different types.

In some embodiments, the WUS information may include at least one of the following: resource allocation information occupied by a WUS; modulation coding information of the WUS; structural information of the WUS; transmission power configuration information of the WUS; or the like.

Further, the WUS information may further include Cyclic Redundancy Check (CRC) information or padding information. CRC is an algorithm configured to detect or check whether there is an error during data or information transmission. The padding information is mainly configured to ensure that a length of a data packet meets a specific requirement. In wireless communication protocol, the size and format of the data packet must meet the specific requirement, so as to ensure that data can be correctly transmitted and analyzed. When the size of one data packet does not meet the standard, the padding information is required to increase the length of the data packet, causing the data packet to reach a required length. The padding information may be specific characters or binary data, which is configured to occupy superfluous space in the data packet. Specific content of the padding information is not limited in the present disclosure.

In this embodiment, the first indication information is configured to indicate at least one of the following:
position information of a second number of target symbols in a first number of target symbols;
a size of a load for the first-type information;
a size of a load for the second-type information;
value information of the second number;
the number of bits or elements comprised in an information set;
the number of states corresponding to the bits or elements comprised in the information set;
the number of third sequences required for the states corresponding to the bits or elements comprised in the information set;
whether the second-type information or sixth-type information comprises Cyclic Redundancy Check (CRC) information and/or padding information;
whether the second-type information or sixth-type information is repeatedly sent;
the number of times for repeatedly sending the second-type information or sixth-type information;
whether the second-type information or sixth-type information is sent in a frequency hopping manner; or
a frequency hopping sending pattern of the second-type information or sixth-type information.

In this embodiment, the sixth-type information is generated from the second-type information through a second processing process; and the second processing process includes at least one of the following: chunking, repetition, bit-level repetition, source coding, channel coding, modulation, interleaving, padding bit addition, CRC bit addition, or rate matching.

In this embodiment, a size of a load for the WUS information is the number of bits carrying the WUS information, for example, may be 8 bits, 16 bits, 24 bits, or a larger load.

Further, the size of the load may be determined by a length of Low Power Synchronization Signal (LP-SS) or LP-preamble. Exemplarily, when the length of the LP-SS or LP-Preamble is 16 OOK symbols, a corresponding wake-up information load is 8 bits; and when the length of the LP-SS or LP-Preamble is 32 OOK symbols, the corresponding wake-up information load is 24 bits.

In some embodiments, the position information includes at least one of the following: initial position information of one or more regions in a first number of target symbols, where the first number of target symbols are divided into a plurality of regions; cutoff position information of the one or more regions in the first number of target symbols, where the first number of target symbols are divided into a plurality of regions; indication information for the one or more regions; or symbol index information of the second number of target symbols.

In some embodiments, the target signal includes at least one of the following:
a first-type signal, where the first-type signal occupies a first number of target symbols in the time domain, and is configured to send first-type information;
a second-type signal, where the second-type signal occupies a second number of target symbols in the time domain, and is configured to send second-type information; or
a third-type signal, where the third-type signal occupies a third number of target symbols in the time domain, and is configured to send first indication information.

Exemplarily, if the target symbol is the OOK symbol or MC-OOK symbol, the first-type signal occupies a first number of OOK symbols or MC-OOK symbols in the time domain. If the target symbol is the OFDM symbol, the first-type signal occupies a first number of OFDM symbols in the time domain. Further, one OFDM symbol may include a plurality of OOK symbols or MC-OOK symbols.

Exemplarily, if the target symbol is the OOK symbol or MC-OOK symbol, the second-type signal occupies a second number of OOK symbols or MC-OOK symbols in the time domain. If the target symbol is the OFDM symbol, the second-type signal occupies a second number of OFDM symbols in the time domain.

In some embodiments, the first-type signal includes at least one of the following: a first signal, a second signal, or a third signal.

The first signal is configured to achieve downlink synchronization or Radio Resource Management (RRM) measurement or channel quantity measurement (e.g., RSRP or RSRQ measurement); and at least one first signal is provided.

In an exemplary embodiment, the first signal may be an LP-SS; the second signal may be an Lp-preamble; and the third signal may be an LP-WUS. Further, the target signal may only include the LP-WUS, and the LP-Preamble and the LP-SS are optional signals.

In some embodiments, different first-type signals may be arbitrarily combined with different pieces of first-type information. Exemplarily, when the first-type signal is the first signal, the carried first-type information is the information for the first sequence; and when the first-type signal is the second signal, the carried first-type information is the information for the second sequence; and when the first-type signal is the third signal, the carried first-type information is the WUS information.

In this embodiment, the first sequence carried in the first signal (e.g., LP-SS) may be independently configured in each cell. Exemplarily, different cells are configured with different first sequences.

Further, sequences carried in the LP-SS are taken from one sequence set, and each cell selects at least one sequence from the sequence set. Exemplarily, different cells are configured with different sequences or independently configured with sequences carried in the LP-SS.

In some embodiments, the second-type signal is generated according to the third sequence. Exemplarily, the third sequence may include, but is not limited to, a ZC sequence, an M sequence, a PN sequence, or other sequences. Further, the third sequence is used in the generation process of the second-type signal. The specific generation process may be referred to description of the LP-WUS generation process in the present disclosure, and thus is not described herein again.

In some embodiments, the second number of target symbols refers to part or all of target symbols in the first number of target symbols.

Further, the second-type signal may also be a signal that is generated on partial target symbol by the first-type signal.

In some embodiments, the second number of target symbols refers to part or all of target symbols of which bits or elements in first-type information sent in the first number of target symbols are 1; or the second number of target symbols refers to part or all of target symbols of which bits or elements in fifth-type information sent in the first number of target symbols are 1; or the second number of target symbols refers to part or all of target symbols of which bits or elements in the first-type information sent in the first number of target symbols are 1, where at least one bit or at least one element in the first-type information is sent in each target symbol; or the second number of target symbols refers to part or all of target symbols of which bits or elements in the fifth-type information sent in the first number of target symbols are 1, wherein at least one bit or at least one element in the fifth-type information is sent in each target symbol; the fifth-type information is generated from the first-type information through a first processing process; and the first processing process includes at least one of the following: chunking, repetition, bit-level repetition, source coding, channel coding, modulation, interleaving, padding bit addition, CRC bit addition, or rate matching.

In an exemplary embodiment, the target symbol may be an OOK symbol or an MC-OOK symbol, and in this case, the second number of target symbols is taken from OOK symbols or MC-OOK symbols of which bits or elements in the first-type information (or fifth-type information) are 1. The target symbol may also be an OFDM symbol, and in this case, the second number of target symbols is taken from OFDM symbols of which bits or elements in the first-type information (or fifth-type information) are 1.

In some embodiments, before S102 of sending the target signal carrying the target information, the method further comprises: the second-type information is divided into at least one information set in a case where the target information includes the second-type information, where each information set includes at least one bit or at least one element in the second-type information; or in a case where the target information includes the second-type information, processing the second-type information through a second processing process to generate sixth-type information, and the sixth-type information is divided into the at least one information set, where each information set includes at least one bit or at least one element in the sixth-type information, and the second processing process includes at least one of the following: chunking, repetition, bit-level repetition, source coding, channel coding, modulation, interleaving, padding bit addition, CRC bit addition, or rate matching.

In some embodiments, S102 of sending the target signal carrying the target information includes: the second-type signal carrying the at least one information set is sent to the second number of target symbols, where each information set is carried in one target symbol for sending. The target symbol may be the OOK symbol or MC-OOK symbol, but the present disclosure is not limited thereto.

In some embodiments, before S102 of sending the target signal carrying the target information, the method further includes: a third sequence corresponding to information content in the information set is determined according to a first principle, where the third sequence is configured to indicate information carried in the information set. Exemplarily, if the information set includes 2-bit information, 4 different sequences need to be used for indication; if the information set includes 3-bit information, 8 different sequences need to be used for indication; and so on. The number of sequences for indication grows exponentially with the number of information bits in the information set.

In an exemplary embodiment, one information set includes 2-bit information, 4 different sequences need to be used for indication, and in this case, the 4 sequences are defined as [Seq0, Seq1, Seq2, Seq3], which respectively correspond to 2-bit information states [00, 01, 10, 11], as shown in Table 1 below.

**Table 1**

| Sequence index | Sequence | 2-bit information content |
|---|---|---|
| 0 | Seq0 | 0 0 |
| 1 | Seq1 | 0 1 |
| 2 | Seq2 | 1 0 |
| 3 | Seq3 | 1 1 |

A corresponding sequence index is found as Initial_Index from Table 1 according to the 2-bit information state in the sent information set, an index of the used target symbol is determined as Symbol_{index} , and an index i of the third sequence used by the target symbol is as follows: $i = \left(Initial_Index+{Symbol}_{index}\right) mod {N}_{State}$

N_{State} is the number of information states in the information set, and in this embodiment, N_{State} = 4.

mod is a modulus operator, which calculates the remainder. For example, a mod b=c indicates that when a is divided by b, the remainder is c.

In some embodiments, the first principle includes at least one of the following.

The third sequences sent in the plurality of target symbols are the same, in a case where the information content in the plurality of information set is the same.

The third sequences sent in the plurality of target symbols are determined according to a first rule, in a case where the information content in the plurality of information set is the same, where the first rule may be pre-designed or configured, or may also be configured by default, or sent to a UE by a base station.

The third sequence sent in the target symbol is determined at least according to an index of the target symbol.

The third sequence sent in the target symbol is determined at least according to a relative position or relative index of the target symbol in the second number of target symbols.

Further, before S102 of sending the target signal carrying the target information, the method further includes: scrambling codes are configured for the third sequences sent in the plurality of target symbols, in a case where the third sequences sent in the plurality of target symbols are the same.

In some embodiments, the scrambling codes may be configured for the third sequences sent in the plurality of target symbols by using any of the following manners.

Scrambling codes corresponding to different target symbols are configured independently.

A scrambling code configured for the third sequence in each target symbol is determined according to a predetermined rule or a default rule or a rule configured by the base station.

A scrambling code used in a first-type symbol is determined at least according to the index of the target symbol.

A scrambling code used in the target symbol is determined at least according to "the relative position or relative index of the target symbol in the second number of target symbols".

In some embodiments, in a case where the number R of times for repeatedly sending the second-type information or sixth-type information is greater than 1, S102 of sending the target signal carrying the target information includes at least one of the following: each information set in the second-type information or sixth-type information is repeatedly sent in sequence for R times; or each information set in the second-type information or sixth-type information is sent in sequence, and this process is repeated for R times.

Exemplarily, the second-type information includes 4 information sets [A, B, C, D], the number of times for repeated sending is R=4, and a sending sequence may be [A, A, A, A, B, B, B, B, C, C, C, C, D, D, D, D], or [A, B, C, D, A, B, C, D, A, B, C, D, A, B, C, D].

In some embodiments, in a case where each information set in the second-type information or sixth-type information is repeatedly sent in sequence for R times, the third sequences sent in R target symbols occupied by each information set are the same, and/or the R target symbols occupied by each information are continuous in the time domain, and/or scrambling codes configured in the R target symbols occupied by each information are the same.

In some embodiments, the third-type signal is generated according to a fourth sequence; and the third-type signal carries the first indication information. Exemplarily, the third-type signal may be the first signal or second signal in the first-type signal.

Exemplarily, the second sequence may be configured to perform at least one of the following operations: downlink synchronization; downlink time bias estimation; downlink frequency bias estimation; or indication of position information of the third signal. Exemplarily, the position information of the third signal may be that an initial position of the third signal is after the second sequence, or there is a gap between the third signal and the second signal, where the value of the gap is configured by default or configured by the base station. At least one second sequence is provided.

In some embodiments, the third number of target symbols refers to part or all of target symbols in the first number of target symbols.

In some embodiments, the third number of target symbols refers to part or all of target symbols of which bits or elements in the first-type information sent in the first number of target symbols are 1; or the third number of target symbols refers to part or all of target symbols of which bits or elements in fifth-type information sent in the first number of target symbols are 1; or the third number of target symbols refers to part or all of target symbols of which bits or elements in the first-type information sent in the first number of target symbols are 1, where at least one bit or at least one element in the first-type information is sent in each target symbol; or the third number of target symbols refers to part or all of target symbols of which bits or elements in the fifth-type information sent in the first number of target symbols are 1, where at least one bit or at least one element in the fifth-type information is sent in each target symbol; the fifth-type information is generated from the first-type information through a first processing process; and the first processing process includes at least one of the following: chunking, repetition, bit-level repetition, source coding, channel coding, modulation, interleaving, padding bit addition, CRC bit addition, or rate matching.

In an exemplary embodiment, the target symbol may be an OOK symbol or an MC-OOK symbol, and in this case, the third number of target symbols is taken from OOK symbols or MC-OOK symbols of which bits or elements in the first-type information (or fifth-type information) are 1. The target symbol may also be an OFDM symbol, and in this case, the third number of target symbols is taken from OFDM symbols of which bits or elements in the first-type information (or fifth-type information) are 1.

In this embodiment, the third number of target symbols is located before the second number of target symbols, in a case where the first number of target symbols includes the second number of target symbols and the third number of target symbols.

Further, a fixed interval may be provided between the third number of target symbols and the second number of target symbols, or the interval between the third number of target symbols and the second number of target symbols may be configured, meaning that a plurality of intervals may be configured, and then a specific interval value is indicated by signaling.

In this embodiment, the manner of sending the first indication information (e.g., position information) is basically similar to the manner of sending the second-type information in the above embodiments. The first indication information may be sent according to the method for sending the second-type information in any one of the above method embodiments. Further, the specific content for the manner of sending the first indication information is as follows.

In some embodiments, before S102 of sending the target signal carrying the target information, the method further includes: the first indication information is divided into at least one information set in a case where the target information includes the first indication information, where each information set includes at least one bit or at least one element in the first indication information; or in a case where the target information includes the first indication information, the first indication information is processed through a third processing process to generate seventh-type information, and the seventh-type information is divided into the at least one information set, where each information set includes at least one bit or at least one element in the seventh-type information, and the third processing process includes at least one of the following: chunking, repetition, bit-level repetition, source coding, channel coding, modulation, interleaving, padding bit addition, CRC bit addition, or rate matching.

In some embodiments, S102 of sending the target signal carrying the target information includes: the third-type signal carrying the at least one information set is sent to the third number of target symbols, where each information set is carried in one target symbol for sending.

In some embodiments, before S102 of sending the target signal carrying the target information, the method further includes: a fourth sequence corresponding to information content in the information set is determined according to a second principle, where the fourth sequence is configured to indicate information carried in the information set.

In some embodiments, the second principle includes at least one of the following.

The fourth sequences sent in the plurality of target symbols are the same, in a case where the information content in the plurality of information set is the same.

The fourth sequences sent in the plurality of target symbols are determined according to a second rule, in a case where the information content in the plurality of information set is the same, where the second rule may be pre-designed or configured, or may also be configured by default, or sent to the UE by the base station.

The fourth sequence sent in the target symbol is determined according to an index of the target symbol.

The fourth sequence sent in the target symbol is determined according to a relative position or relative index of the target symbol in the third number of target symbols.

In some embodiments, before S102 of sending the target signal carrying the target information, the method further includes: scrambling codes are configured for the fourth sequences sent in the plurality of target symbols, in a case where the fourth sequences sent in the plurality of target symbols are the same.

In some embodiments, in a case where the number R of times for repeatedly sending the first indication information or seventh-type information is greater than 1, sending the target signal carrying the target information includes at least one of the following: each information set in the first indication information or seventh-type information is repeatedly sent in sequence for R times; or each information set in the first indication information or seventh-type information is sent in sequence, and this process is repeated for R times.

Further, in a case where each information set in the first indication information or seventh-type information is repeatedly sent in sequence for R times, the fourth sequences sent in R target symbols occupied by each information set are the same, and/or the R target symbols occupied by each information are continuous in the time domain, and/or scrambling codes configured in the R target symbols occupied by each information are the same.

In some embodiments, the method further includes: activation or deactivation of the target signal is indicated and monitored through Downlink Control Information (DCI). The DCI is sent in a PDCCH.

In an exemplary embodiment, the activation or deactivation of the target signal may be indicated and monitored through 1-bit information or multi-bit information in the DCI.

The embodiments of the present disclosure may achieve, based on a low-power wake-up mechanism, data transmission in real time when a main receiver is in a deep sleep state, solving the problem in the related art of a Low Power Wake-up signal (LP-WUS) carrying information, thereby further reducing power consumption of a terminal.

In some embodiments, the target signal in the present disclosure may be generated by means of OOK modulation. Exemplarily, in an example of the LP-WUS, a waveform of the LP-WUS may be referred to as an OOK based LP-WUS, and may also be referred to as an MC-OOK based LP-WUS when the number of sub-carriers occupied by the OOK based LP-WUS in a frequency domain is greater than 1. The LP-WUS based generation process is specifically described below. However, the following signal generation process is not limited to the generation of the LP-WUS, and may further be configured to generate the LP-SS or LP-Preamble.

In an embodiment, description is performed in an example of a signal occupying a time domain of M OOK symbols and the number of sub-carriers in an occupied frequency domain being K, where M is greater than or equal to 1. Fig. 2 is a flowchart I of a method for generating an MC-OOK based LP-WUS according to embodiments of the present disclosure. As shown in Fig. 2, the flow includes the following steps.

At S201, if data information sent on M OOK symbols is S_{M}, S_{M} = [s₀, s₁, s₂, s₃..., s_{M-1}] is defined, with a length being M. Exemplarily, the data information S_{M} may be referred to as at least one of the following: coded bit information, coded sequence information, or code word information.

In this embodiment, S_{M} is data information carried on M OOK symbols, such as source information, check information, padding information, etc.; and S_{M} may also be obtained by performing data processing on the data information. The processing process includes at least one of the following: chunking, repetition, bit-level repetition, source coding, channel coding, modulation, interleaving, padding bit addition, CRC bit addition, or rate matching.

At S202, S_{M} is converted into data information Q_{K} with a length of K, where K is greater than or equal to 1. Exemplarily, conversion may be performed by using Manner I or Manner II below, but the present disclosure is not limited thereto.

Manner 1: ${Q}_{K} = \left[{{{s}_{0} , {s}_{0} , ⋯ , {s}_{0}}_{︸}}_{{A}_{0}}, {{{s}_{1} , {s}_{1} , ⋯ , {s}_{1}}_{︸}}_{{A}_{1}}, ⋯, {{{s}_{M - 1} , {s}_{M - 1} , ⋯ , {s}_{M - 1}}_{︸}}_{{A}_{M - 1}}\right]$

Manner 2: ${Q}_{K} = \left[\begin{matrix}{{{w}_{0}^{0} ⋅ {s}_{0} , {w}_{0}^{1} ⋅ {s}_{0} , ⋯ , {w}_{0}^{{A}_{0} - 1} ⋅ {s}_{0}}_{︸}}_{{A}_{0}} , {{{w}_{1}^{0} ⋅ {s}_{1} , {w}_{1}^{1} ⋅ {s}_{1} , ⋯ , {w}_{1}^{{A}_{1} - 1} ⋅ {s}_{1} ,}_{︸}}_{{A}_{1}} \\ ⋯ , {{{w}_{M - 1}^{0} ⋅ {s}_{M - 1} , {w}_{M - 1}^{1} ⋅ {s}_{M - 1} , ⋯ , {w}_{M - 1}^{{A}_{M - 1}} {s}_{M - 1}}_{︸}}_{{A}_{M - 1}}\end{matrix}\right]$

A₀ + A₁ + ··· Aᵢ + ... + A_{M-1} = K. Exemplarily, A₀ to A_{M-1} may be the same.

In this embodiment, values of $\left[{w}_{i}^{0}, {w}_{i}^{1}, ⋯, {w}_{i}^{{A}_{i} - 1}\right]$ may be configured, where 0 ≤ i ≤ M - 1. Exemplarily, $\left[{w}_{i}^{0}, {w}_{i}^{1}, ⋯, {w}_{i}^{{A}_{i} - 1}\right]$ may be the third sequence, and information of each sequence corresponds to information content carried on the corresponding OOK symbol.

At S203, the data information Q_{K} is subjected to a K-point Discrete Fourier Transform (DFT) or K-point Fast Fourier Transform (FFT) operation to obtain data information D_{K} = [d₀, d₁, d₂, d₃, ... , d_{K-1}].

In some embodiments, after S203, at least one of the following operations may be performed on D_{K}.

An upward cyclic shift operation is performed on D_{K}, and a size of cyclic shift is $\left⌈K/2\right⌉ , \left⌊K/2\right⌋$, or K/2, where ┌ ┐ is a round-up operator, and └ ┘ is a round-down operator.

A downward cyclic shift operation is performed on D_{K}, and a size of cyclic shift is $\left⌈K/2\right⌉ , \left⌊K/2\right⌋$, or K/2, where ┌ ┐ is a round-up operator, and └ ┘ is a round-down operator.

A leftward cyclic shift operation is performed on D_{K}, and a size of cyclic shift is $\left⌈K/2\right⌉ , \left⌊K/2\right⌋$, or K/2, where ┌ ┐ is a round-up operator, and └ ┘ is a round-down operator.

A rightward cyclic shift operation is performed on D_{K}, and a size of cyclic shift is $\left⌈K/2\right⌉ , \left⌊K/2\right⌋$, or K/2, where ┌ ┐ is a round-up operator, and └ ┘ is a round-down operator.

An FFTSHIFT operation is performed on D_{K}, where FFTSHIFT is a function that is configured to shift a zero-frequency component of Fourier transform to the center of a frequency spectrum. For a vector X, FFTSHIFT(X) swaps left and right halves of the X, or swaps top and bottom halves of the X. For a matrix X, FFTSHIFT(X) swaps first and third quadrants, as well as second and fourth quadrants.

At S204, the data information D_{K} is padded onto K sub-carriers in the frequency domain; and when an overall frequency-domain bandwidth of a system includes N sub-carriers, an N-point Inverse Discrete Fourier Transform (IDFT) or N-point Inverse Fast Fourier Transform (IFFT) operation is performed on padding data on N sub-carriers, so as to obtain time-domain data T_{N} = [t₀, t₁, t₂, t₃, ... , t_{N-1}] of N sampling points, where N is greater than or equal to 1.

In this embodiment, T_{N} = [t₀, t₁, t₂, t₃, _{.}..., t_{N-1}] refers to sampling point data of M OOK time-domain symbols, where [t₀, t₁, t₂, t₃, ... ,t_{N/M-1}] refers to sampling point data of the first one among the M OOK time-domain symbols, [t_{N/M}, t_{N/M+1}, ... ,t_{2N/M-1}] refers to sampling point data of the second one among the M OOK time-domain symbols, and so on, [t_{(M-1)N/M}, t_{(M-1)N/M+1}, ... , t_{N-1}] refers to sampling point data of the Mth one among the M OOK time-domain symbols.

In some embodiments, before the N-point IDFT/IFFT operation is performed in S204, at least one of the following operation may also be performed on data padded on the N sub-carriers.

The upward cyclic shift operation is performed on the data, and a size of cyclic shift is $\left⌈N/2\right⌉$, $\left⌊N/2\right⌋$, or N/2, where ┌ ┐ is a round-up operator, and └ ┘ is a round-down operator.

The downward cyclic shift operation is performed on the data, and a size of cyclic shift is $\left⌈N/2\right⌉$, $\left⌊N/2\right⌋$, or N/2, where ┌ ┐ is a round-up operator, and └ ┘ is a round-down operator.

The leftward cyclic shift operation is performed on the data, and a size of cyclic shift is $\left⌈N/2\right⌉$, $\left⌊N/2\right⌋$, or N/2, where ┌ ┐ is a round-up operator, and └ ┘ is a round-down operator.

The rightward cyclic shift operation is performed on the data, and a size of cyclic shift is $\left⌈N/2\right⌉$, $\left⌊N/2\right⌋$, or N/2, where ┌ ┐ is a round-up operator, and └ ┘ is a round-down operator.

The FFTSHIFT operation is performed on the data, where FFTSHIFT is a function that is configured to shift a zero-frequency component of Fourier transform to the center of a frequency spectrum. For a vector X, FFTSHIFT(X) swaps left and right halves of the X, or swaps top and bottom halves of the X. For a matrix X, FFTSHIFT(X) swaps first and third quadrants, as well as second and fourth quadrants.

At S205, an operation of adding a Cyclic Prefix (CP) also needs to be performed before the time-domain data T_{N} = [t₀, t₁, t₂, t₃, ... ,t_{N-1}] of the N sampling points. Specifically, Ncp pieces of sampling point information at a tail portion of the time-domain data T_{N} of the N sampling points are copied to a head portion of the time-domain data T_{N} of the N sampling points, so as to form time-domain data of (N+Ncp) sampling points, and then data of the (N+Ncp) sampling points is sent.

In an exemplary embodiment, one OFDM symbol may include M OOK symbols, and a signal of this OFDM symbol may be generated through S201 to S205.

In some other embodiments, the number of frequency-domain sub-carriers allocated for the MC-OOK based LP-WUS symbol may be not equal to K, and in this case, S204 needs to be adjusted.

Fig. 3 is a flowchart II of a method for generating an MC-OOK based LP-WUS according to embodiments of the present disclosure. As shown in Fig. 3, when the number of frequency-domain sub-carriers allocated for the MC-OOK based LP-WUS symbol is not equal to K, for example, the number of frequency-domain sub-carriers is K1, and K1 is not equal to K, the process of S204 needs to be modified into the following steps.

At S2041, the data information D_{K} = [d₀, d₁, d₂, d₃, ... , d_{K-1}] is processed to convert D_{K} into E_{K1}, where E_{K1} = [e₀, e₁, e₂, e₃, ... , e_{K1-1}].

In some embodiments, at least one of the following operations may also be performed on E_{K1}.

The upward cyclic shift operation is performed on D_{E_{K1}}, and a size of cyclic shift is $\left⌈K1/2\right⌉$, $\left⌊K1/2\right⌋$, or K1/2, where ┌ ┐ is a round-up operator, and └ ┘ is a round-down operator.

The downward cyclic shift operation is performed on E_{K1}, and a size of cyclic shift is $\left⌈K1/2\right⌉$, $\left⌊K1/2\right⌋$, or K1/2, where ┌ ┐ is a round-up operator, and └ ┘ is a round-down operator.

The leftward cyclic shift operation is performed on E_{K1}, and a size of cyclic shift is $\left⌈K1/2\right⌉$, $\left⌊K1/2\right⌋$, or K1/2, where ┌ ┐ is a round-up operator, and └ ┘ is a round-down operator.

The rightward cyclic shift operation is performed on E_{K1}, and a size of cyclic shift is $\left⌈K1/2\right⌉$, $\left⌊K1/2\right⌋$, or K1/2, where ┌ ┐ is a round-up operator, and └ ┘ is a round-down operator.

An FFTSHIFT operation is performed on E_{K1}, where FFTSHIFT is a function that is configured to shift a zero-frequency component of Fourier transform to the center of a frequency spectrum. For a vector X, FFTSHIFT(X) swaps left and right halves of the X, or swaps top and bottom halves of the X. For a matrix X, FFTSHIFT(X) swaps first and third quadrants, as well as second and fourth quadrants.

At S2042, the data information E_{K1} is padded onto K1 sub-carriers in the frequency domain.

At S2043, when the overall frequency-domain bandwidth of the system includes N sub-carriers, the N-point IDFT/IFFT operation is performed on the padding data on the N sub-carriers, so as to obtain the time-domain data T_{N} = [t₀, t₁, t₂, t₃, ... , t_{N-1}] of the N sampling points. where N is greater than or equal to 1.

In this embodiment, T_{N} = [t₀, t₁, t₂, t₃, ... , t_{N-1}] refers to sampling point data of M OOK time-domain symbols, where [t₀, t₁, t₂, t₃, ..., t_{N/M-1}] refers to sampling point data of the first one among the M OOK time-domain symbols, [t_{N/M}, t_{N/M+1}, ... , t_{2N/M-1}] refers to sampling point data of the second one among the M OOK time-domain symbols, and so on, [t_{(M-1)N/M,} t_{(M-1)N/M+1}, ..., t_{N-1}] refers to sampling point data of the Mth one among the M OOK time-domain symbols.

In some embodiments, before the N-point IDFT/IFFT operation is performed in S2043, at least one of the following operation may also be performed on data padded on the N sub-carriers.

The upward cyclic shift operation is performed on the data, and a size of cyclic shift is [N/2], $\left⌊N/2\right⌋$, or N/2, where ┌ ┐ is a round-up operator, and └ ┘ is a round-down operator.

The downward cyclic shift operation is performed on the data, and a size of cyclic shift is [N/2], $\left⌊N/2\right⌋$, or N/2, where ┌ ┐ is a round-up operator, and └ ┘ is a round-down operator.

The leftward cyclic shift operation is performed on the data, and a size of cyclic shift is [N/2], $\left⌊N/2\right⌋$, or N/2, where ┌ ┐ is a round-up operator, and └ ┘ is a round-down operator.

The rightward cyclic shift operation is performed on the data, and a size of cyclic shift is [N/2], $\left⌊N/2\right⌋$, or N/2, where ┌ ┐ is a round-up operator, and └ ┘ is a round-down operator.

The FFTSHIFT operation is performed on the data, where FFTSHIFT is a function that is configured to shift a zero-frequency component of Fourier transform to the center of a frequency spectrum. For a vector X, FFTSHIFT(X) swaps left and right halves of the X, or swaps top and bottom halves of the X. For a matrix X, FFTSHIFT(X) swaps first and third quadrants, as well as second and fourth quadrants.

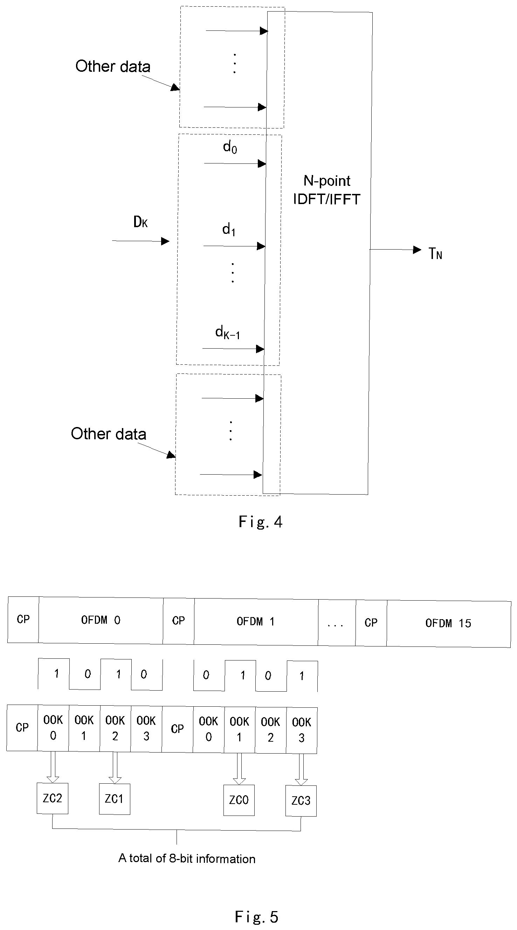

In another embodiment, only one signal occupying 1 OOK symbol may be generated each time, and the number of frequency-domain sub-carriers occupied by the signal is K. Fig. 4 is a flowchart III of a method for generating an MC-OOK based LP-WUS according to embodiments of the present disclosure. As shown in Fig. 4, the flow includes the following steps.

At S401, the data information D_{K} = [d₀, d₁, d₂, d₃, ... , d_{K-1}] is padded onto K sub-carriers in the frequency domain, where K is greater than or equal to 1.

At S402, when the overall frequency-domain bandwidth of the system includes N sub-carriers, the N-point IDFT/IFFT operation is performed on the padding data on the N sub-carriers, so as to obtain the time-domain data T_{N} = [t₀, t₁, t₂, t₃, ... , t_{N-1}] of the N sampling points. where N is greater than or equal to 1, and T_{N} = [t₀, t₁, t₂, t₃, ... , t_{N-1}] refers to sampling point data of MC-OOK time-domain symbols.

At S403, an operation of adding a CP also needs to be performed before the time-domain data T_{N} = [t₀, t₁, t₂, t₃, ... , t_{N-1}] of the N sampling points. That is, Ncp pieces of sampling point information at a tail portion of the time-domain data T_{N} of the N sampling points are copied to a head portion of the time-domain data T_{N} of the N sampling points, so as to form time-domain data of (N+Ncp) sampling points, and then data of the (N+Ncp) sampling points is sent.

In this embodiment, the data information D_{K} is determined according to information content carried on this OOK symbol. The specific method may be referred to S201 to S203. However, the generation of the data information D_{K} is not limited in this embodiment.

In this embodiment, one OFDM symbol only includes one OOK symbol.
according to the above MC-OOK based LP-WUS generation method, other target signals in the present disclosure may also be generated, such as an LP-SS, an LP-Preamble, etc.

In the embodiments of the present disclosure, the information set may be repeatedly sent or not be repeatedly sent. The information sending method in the present disclosure is specifically described below based on different repeated sending manners.

### Embodiment 1

In an example of an LP-WUS, the sending of the LP-WUS occupies at least one OFDM symbol, a length L_{B} of data information B_{L_{B}} carried during sending is 16 bits, and the data information may be expressed as: ${B}_{{L}_{B}} = \left[{b}_{0}, {b}_{1}, {b}_{2}, {b}_{3}, {b}_{4}, {b}_{5}, {b}_{6}, {b}_{7}, {b}_{8}, {b}_{9}, {b}_{10}, {b}_{11}, {b}_{12}, {b}_{13}, {b}_{14}, {b}_{15}\right] .$ b₀, b₁, b₂, b₃, b₄, b₅, b₆, b₇ are source information bits, and b₈, b₉, b₁₀, b₁₁, b₁₂, b₁₃, b₁₄, b₁₅ are CRC bits.

In this embodiment, the data information B_{L_{B}} may be regarded as first-type information, and the source information bit may be regarded as second-type information. In this case, a first number of target symbols may refer to OOK symbols or OFDM symbols occupied by the data information B_{L_{B}}. A second number of target symbols refers to OOK symbols or OFDM symbols occupied by first-8-bit source information.

In this embodiment, a first processing process is performed on each bit bi in the first-type information, such that the first-type information may be converted into fifth-type information.

Exemplarily, the first processing process may use Manchester encoding. A code rate of Manchester encoding is 1/4, and a rule for Manchester encoding includes the following two manners.

Manner I, when bᵢ = 0, code words generated after Manchester encoding are [0, 1, 0, 1]; and when bᵢ = 1, the code words generated after Manchester encoding are [1, 0, 1, 0].

Manner II, when bᵢ = 0, code words generated after Manchester encoding are [1, 0, 1, 0]; and when bᵢ = 1, the code words generated after Manchester encoding are [0, 1, 0, 1].

In this embodiment, the rule for Manchester encoding selects Manner I: when bᵢ = 0, the code words generated after Manchester encoding are [0, 1, 0, 1]; and when bᵢ = 1, the code words generated after Manchester encoding are [1, 0, 1, 0].

Data information generated after the data information B_{L_{B}} in this embodiment is subjected to Manchester encoding is C_{L_{C}}, C_{L_{C}} = [c₀, c₁, c₂, ·· ·, c₆₃], and a length of C_{L_{C}} is L_{C} =64. In this embodiment, the data information C_{L_{C}} may be regarded as the fifth-type information.

In this embodiment, one element in the data information C_{L_{C}} is carried in one OOK symbol for sending, and the data information C_{L_{C}} needs to be carried in 64 OOK symbols for sending. Moreover, in this embodiment, a time-domain length occupied by 4 OOK symbols is the same as a length of one OFDM symbol or is included in one OFDM symbol; and the lengths of 64 OOK symbols are the same as the lengths of 16 OFDM symbols or are included in 16 OFDM symbols. A method for calculating the length of one OFDM symbol includes: a length of CP plus the length of the corresponding OFDM symbol, or the length of one OFDM symbol does not include the length of CP.

In this embodiment, each OOK symbol may indicate 2-bit information through carried sequence information. The 2-bit information has 4 different states, which respectively correspond to 4 sequences, such that a sequence carried in each OOK symbol is taken from one of the 4 sequences. In this embodiment, the sequence may select a ZC sequence. A total of 4 ZC sequences need to be configured, which respectively are [ZC0, ZC1, ZC2, ZC3], each of which indicates one of 4 states of the 2-bit information, for example, the 4 states are [0 0, 0 1, 1 0, 1 1], respectively.

In this embodiment, the first number of target symbols may also refer to 64 OOK symbols or 16 OFDM symbols occupied by the data information C_{L_{C}}. The second number of target symbols refers to OOK symbols or OFDM symbols occupied by 8-bit source information. In this embodiment, the second number of target symbols may refer to 4 OOK symbols with elements being "1", or 2 OFDM symbols including the 4 OOK symbols with the elements being "1".

The present disclosure is not limited to the LP-WUS, and may also be applied to an LP-SS, an LP-Preamble, etc.

Fig. 5 is a schematic diagram I of 4 OOK symbols carrying 8-bit information according to embodiments of the present disclosure.

In this embodiment, the source information bits b₀, b₁, b₂, b₃, b₄, b₅, b₆, b₇ in the data information B_{L_{B}} may be carried in 4 OOK symbols for sending and not be send repeatedly. A specific sending method includes the following.

The 4 OOK symbols are 4 OOK symbols with elements being "1" in the sent data information C_{L_{C}}.

Each of the 4 OOK symbols may indicate the 2-bit information through the carried sequence information. In this way, the 4 OOK symbols may indicate 8-bit information. The 2-bit information has 4 different states, which respectively correspond to 4 sequences, such that a sequence carried in each OOK symbol is taken from one of the 4 sequences.

In this embodiment, after the source information bits b₀, b₁, b₂, b₃, b₄, b₅, b₆, b₇ = [1 0 0 1 0 0 1 1] in the data information B_{L_{B}} are subjected to Manchester encoding, elements in the first 8 OOK symbols may be obtained to be c₀, c₁, c₂, c₃, c₄, c₅, c₆, c₇ = [1 0 1 0 0 1 0 1].

Further, 4 OOK symbols carried in an OFDM symbol 0 carry 1st to 4th elements [1 0 1 0] in the data information C_{L_{C}} encoded by b₀; and 4 OOK symbols carried in an OFDM symbol 1 carry 5th to 8th elements [0 1 0 1] in the data information C_{L_{C}} encoded by b₁.

In this embodiment, the source information bits b₀, b₁, b₂, b₃, b₄, b₅, b₆, b₇ in the data information B_{L_{B}} are carried by the above 4 OOK symbols that carry the elements of "1" in C_{L_{C}}. Four OOK symbols with elements being 1 are selected from 8 OOK symbols according to the data information C_{L_{C}} ; each of the 4 OOK symbols carries the 2-bit information; and the carried information may be indicated by a sequence (e.g., ZC sequence).

In this embodiment, the source information bits in the data information B_{L_{B}} may be divided into 4 information sets, which are [10], [01], [00], and [11]; each information set includes the 2-bit information; each information set is indicated by one ZC sequence, which respectively are ZC2, ZC1, ZC0, and ZC3; and each information set is carried in one OOK symbol.

As shown in Fig. 5, a ZC sequence index carried by OOK0 in a resource corresponding to the OFDM symbol 0 is 2; a ZC sequence index carried by OOK2 in the resource corresponding to the OFDM symbol 0 is 1; a ZC sequence index carried by OOK1 in a resource corresponding to the OFDM symbol 1 is 0; and a ZC sequence index carried by OOK3 in the resource corresponding to the OFDM symbol 1 is 3.

Through the embodiments of the present disclosure, data information may be carried in a symbol of an LP signal, and data transmission is achieved in real time when a main receiver is in a deep sleep state, solving the problem in the related art of an LP-WUS carrying information, thereby further reducing power consumption of a terminal.

### Embodiment 2

In an example of an LP-WUS, the sending of the LP-WUS occupies at least one OFDM symbol, a length L_{B} of data information B_{L_{B}} carried during sending is 16 bits, and the data information may be expressed as: ${B}_{{L}_{B}} = \left[{b}_{0}, {b}_{1}, {b}_{2}, {b}_{3}, {b}_{4}, {b}_{5}, {b}_{6}, {b}_{7}, {b}_{8}, {b}_{9}, {b}_{10}, {b}_{11}, {b}_{12}, {b}_{13}, {b}_{14}, {b}_{15}\right] .$

b₀, b₁, b₂, b₃, b₄, b₅, b₆, b₇ are source information bits, and b₈, b₉, b₁₀, b₁₁, b₁₂, b₁₃, b₁₄, b₁₅ are CRC bits.

In this embodiment, the data information B_{L_{B}} may be regarded as first-type information, and the source information bit may be regarded as second-type information.

In this embodiment, a first processing process is performed on each bit bi in the first-type information, such that the first-type information may be converted into fifth-type information.

Exemplarily, the first processing process may use Manchester encoding. A code rate of Manchester encoding is 1/4, and a rule for Manchester encoding includes the following two manners.

Manner I, when bᵢ = 0, code words generated after Manchester encoding are [0, 1, 0, 1]; and when bᵢ = 1, the code words generated after Manchester encoding are [1, 0, 1, 0].

Manner II, when bᵢ = 0, code words generated after Manchester encoding are [1, 0, 1, 0]; and when bᵢ = 1, the code words generated after Manchester encoding are [0, 1, 0, 1].

In this embodiment, the rule for Manchester encoding selects Manner I: when bᵢ = 0, the code words generated after Manchester encoding are [0, 1, 0, 1]; and when bᵢ = 1, the code words generated after Manchester encoding are [1, 0, 1, 0].

Data information generated after the data information B_{LB} in this embodiment is subjected to Manchester encoding is C_{_{C}}, C_{L_{C}} = [c₀, c₁, c₂, ··· , c₆₃], and a length of C_{L_{C}} is L_{C} =64. In this embodiment, the data information C_{L_{C}} may be regarded as the fifth-type information.

In this embodiment, one element in the data information C_{L_{C}} is carried in one OOK symbol for sending, and the data information C_{L_{C}} needs to be carried in 64 OOK symbols for sending. Moreover, in this embodiment, a time-domain length occupied by 4 OOK symbols is the same as a length of one OFDM symbol or is included in one OFDM symbol; and the lengths of 64 OOK symbols are the same as the lengths of 16 OFDM symbols or are included in 16 OFDM symbols. A method for calculating the length of one OFDM symbol includes: a length of CP plus the length of the corresponding OFDM symbol, or the length of one OFDM symbol does not include the length of CP.

In this embodiment, each OOK symbol may indicate 2-bit information through carried sequence information. The 2-bit information has 4 different states, which respectively correspond to 4 sequences, such that a sequence carried in each OOK symbol is taken from one of the 4 sequences.

Exemplarily, the sequence may select a ZC sequence. A total of 4 ZC sequences need to be configured, which respectively are [ZC0, ZC1, ZC2, ZC3], each of which indicates one of 4 states of the 2-bit information, for example, the 4 states are [0 0, 0 1, 1 0, 1 1], respectively.

The present disclosure is not limited to the LP-WUS, and may also be applied to an LP-SS, an LP-Preamble, etc.

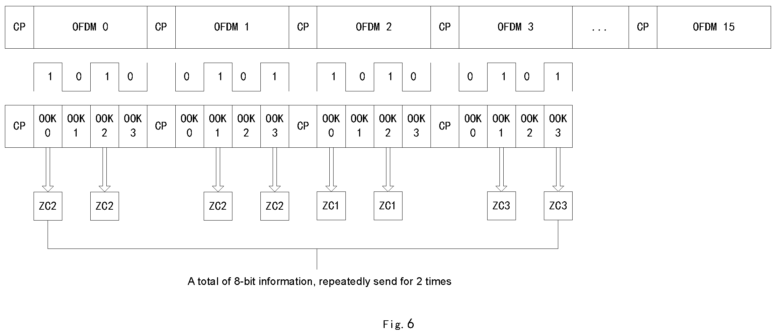

Fig. 6 is a schematic diagram I of 8 OOK symbols carrying 8-bit information according to embodiments of the present disclosure.

In this embodiment, the source information bits b₀, b₁, b₂, b₃, b₄, b₅, b₆, b₇ in the data information B_{L_{B}} may be carried in 8 OOK symbols for sending, and the number of times for repeated sending supported is 2. A specific sending method includes the following.

The 8 OOK symbols are 8 OOK symbols with elements being "1" in the sent data information C_{L_{C}}.

Each of the 8 OOK symbols may indicate the 2-bit information through the carried sequence information, and may indicate 8-bit information through 4 OOK symbols. The sequence carried in each OOK symbol is taken from one of the 4 sequences.

A method for performing repeated sending for 2 times includes: the same ZC sequence is repeatedly sent for 2 times by 2 continuous OOK symbols among the 8 OOK symbols, and in this way, a total of 8 OOK symbols are required to send 4 ZC sequences for 2 times.

In this embodiment, the source information bits b₀, b₁, b₂, b₃, b₄, b₅, b₆, b₇ = [1 0 1 0 0 1 1 1] in the data information B_{L_{B}} are subjected to Manchester encoding to obtain data information C_{L_{C}}, then elements in the data information C_{L_{C}} carried in 4 OOK symbols corresponding to an OFDM symbol 0 are [1 0 1 0], elements in the data information C_{L_{C}} carried in 4 OOK symbols corresponding to an OFDM symbol 1 are [0 1 0 1], elements in the data information C_{L_{C}} carried in 4 OOK symbols corresponding to an OFDM symbol 2 are [1 0 1 0], and elements in the data information C_{L_{C}} carried in 4 OOK symbols corresponding to an OFDM symbol 3 are [0 1 0 1].

In this embodiment, the 8 OOK symbols configured to carry the source information bits may be 8 OOK symbols with elements being "1" in the above carried data information C_{L_{C}}.

In this embodiment, the source information bits in the data information B_{L_{B}} may be divided into 4 information sets, which are [10], [10], [01], and [11]; each information set includes the 2-bit information; each information set is indicated by one ZC sequence, which respectively are ZC2, ZC2, ZC1, and ZC3; and each information set is carried in one OOK symbol. After each information set is repeatedly sent for two times, a next information set is then sent.

As shown in Fig. 6, ZC sequence indexes carried by OOK0 and OOK2 in a resource corresponding to the OFDM symbol 0 are 2; ZC sequence indexes carried by OOK1 and OOK3 in a resource corresponding to an OFDM symbol 1 are 2; ZC sequence indexes carried by OOK0 and OOK2 in a resource corresponding to an OFDM symbol 2 are 1; and ZC sequence indexes carried by OOK1 and OOK3 in a resource corresponding to an OFDM symbol 3 are 3.

Through the embodiments of the present disclosure, data information may be carried in a symbol of an LP signal, and data transmission is achieved in real time when a main receiver is in a deep sleep state, solving the problem in the related art of an LP-WUS carrying information, thereby further reducing power consumption of a terminal.

### Embodiment 3

In an example of an LP-WUS, the sending of the LP-WUS occupies at least one OFDM symbol, a length L_{B} of data information B_{L_{B}} carried during sending is 16 bits, and the data information may be expressed as: ${B}_{{L}_{B}} = \left[{b}_{0}, {b}_{1}, {b}_{2}, {b}_{3}, {b}_{4}, {b}_{5}, {b}_{6}, {b}_{7}, {b}_{8}, {b}_{9}, {b}_{10}, {b}_{11}, {b}_{12}, {b}_{13}, {b}_{14}, {b}_{15}\right] .$

b₀, b₁, b₂, b₃, b₄, b₅, b₆, b₇ are source information bits, and b₈, b₉, b₁₀, b₁₁, b₁₂, b₁₃, b₁₄, b₁₅ are CRC bits.

In this embodiment, the data information B_{L_{B}} may be regarded as first-type information, and the source information bit may be regarded as second-type information.

In this embodiment, a first processing process is performed on each bit bi in the first-type information, such that the first-type information may be converted into fifth-type information.

Exemplarily, the first processing process may use Manchester encoding. A code rate of Manchester encoding is 1/4, and a rule for Manchester encoding includes the following two manners.

Manner I, when bᵢ = 0, code words generated after Manchester encoding are [0, 1, 0, 1]; and when bᵢ = 1, the code words generated after Manchester encoding are [1, 0, 1, 0].

Manner II, when bᵢ = 0, code words generated after Manchester encoding are [1, 0, 1, 0]; and when bᵢ = 1, the code words generated after Manchester encoding are [0, 1, 0, 1].

In this embodiment, the rule for Manchester encoding selects Manner I: when bᵢ = 0, the code words generated after Manchester encoding are [0, 1, 0, 1]; and when bᵢ = 1, the code words generated after Manchester encoding are [1, 0, 1, 0].

Data information generated after the data information B_{L_{B}} in this embodiment is subjected to Manchester encoding is C_{L_{C}}, C_{L_{C}} = [c₀, c₁, c₂, ··· , c₆₃], and a length of C_{LC} is L_{C} =64. In this embodiment, the data information C_{L_{C}} may be regarded as the fifth-type information.

In this embodiment, one element in the data information C_{L_{C}} is carried in one OOK symbol for sending, and the data information C_{L_{C}} needs to be carried in 64 OOK symbols for sending. Moreover, in this embodiment, a time-domain length occupied by 4 OOK symbols is the same as a length of one OFDM symbol or is included in one OFDM symbol; and the lengths of 64 OOK symbols are the same as the lengths of 16 OFDM symbols or are included in 16 OFDM symbols. A method for calculating the length of one OFDM symbol includes: a length of CP plus the length of the corresponding OFDM symbol, or the length of one OFDM symbol does not include the length of CP.

In this embodiment, each OOK symbol may indicate 2-bit information through carried sequence information. The 2-bit information has 4 different states, which respectively correspond to 4 sequences, such that a sequence carried in each OOK symbol is taken from one of the 4 sequences.

Exemplarily, the sequence may select a ZC sequence. A total of 4 ZC sequences need to be configured, which respectively are [ZC0, ZC1, ZC2, ZC3], each of which indicates one of 4 states of the 2-bit information, for example, the 4 states are [0 0, 0 1, 1 0, 1 1], respectively.

The present disclosure is not limited to the LP-WUS, and may also be applied to an LP-SS, an LP-Preamble, etc.

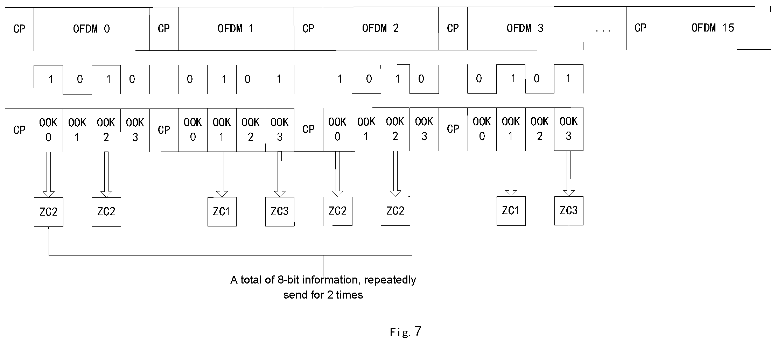

Fig. 7 is a schematic diagram II of 8 OOK symbols carrying 8-bit information according to embodiments of the present disclosure.

In this embodiment, the source information bits b₀, b₁, b₂, b₃, b₄, b₅, b₆, b₇ in the data information B_{L_{B}} may be carried in 8 OOK symbols for sending, and the number of times for repeated sending supported is 2. A specific sending method includes the following.

The 8 OOK symbols are 8 OOK symbols with elements being "1" in the data information C_{L_{C}}.

Each of the 8 OOK symbols indicates the 2-bit information through the carried sequence information, and 8-bit information is indicated by 4 OOK symbols. The sequence carried in each OOK symbol is taken from one of the 4 sequences.

A method for performing repeated sending for 2 times includes: the 8-bit information is first sent by the 4 OOK symbols, and then the 8-bit information is repeatedly sent by the remaining 4 OOK symbols.

In this embodiment, the source information bits b₀, b₁, b₂, b₃, b₄, b₅, b₆, b₇ = [1 0 1 0 0 1 1 1] in the data information B_{L_{B}} are subjected to Manchester encoding to obtain data information C_{L_{C}}, then elements in the data information C_{L_{C}} carried in 4 OOK symbols corresponding to an OFDM symbol 0 are [1 0 1 0], elements in the data information C_{_{C}} carried in 4 OOK symbols corresponding to an OFDM symbol 1 are [0 1 0 1], elements in the data information C_{L_{C}} carried in 4 OOK symbols corresponding to an OFDM symbol 2 are [1 0 1 0], and elements in the data information C_{L_{C}} carried in 4 OOK symbols corresponding to an OFDM symbol 3 are [0 1 0 1].

In this embodiment, the 8 OOK symbols configured to carry the source information bits may be 8 OOK symbols with elements being "1" in the above carried data information C_{L_{C}}.

In this embodiment, the source information bits in the data information may be divided into 4 information sets, which are [10], [10], [01], and [11]; each information set includes the 2-bit information; each information set is indicated by one ZC sequence, which respectively are ZC2, ZC2, ZC1, and ZC3; and each information set is carried in one OOK symbol. After all the information sets are sent once, all the information set are repeatedly sent one more time.

As shown in Fig. 7, a ZC sequence index carried by OOK0 in a resource corresponding to the OFDM symbol 0 is 2; a ZC sequence index carried by OOK2 in the resource corresponding to the OFDM symbol 0 is 2; a ZC sequence index carried by OOK1 in the resource corresponding to the OFDM symbol 1 is 1; a ZC sequence index carried by OOK3 in the resource corresponding to the OFDM symbol 1 is 3; a ZC sequence index carried by OOK0 in a resource corresponding to the OFDM symbol 2 is 2; a ZC sequence index carried by OOK2 in the resource corresponding to the OFDM symbol 2 is 2; a ZC sequence index carried by OOK1 in a resource corresponding to the OFDM symbol 3 is 1; and a ZC sequence index carried by OOK3 in the resource corresponding to the OFDM symbol 3 is 3.

Through the embodiments of the present disclosure, data information may be carried in a symbol of an LP signal, and data transmission is achieved in real time when a main receiver is in a deep sleep state, solving the problem in the related art of an LP-WUS carrying information, thereby further reducing power consumption of a terminal.

### Embodiment 4

In an example of an LP-WUS, the sending of the LP-WUS occupies at least one OFDM symbol, a length L_{B} of data information B_{_{B}} carried during sending is 16 bits, and the data information may be expressed as: ${B}_{{L}_{B}} = \left[{b}_{0}, {b}_{1}, {b}_{2}, {b}_{3}, {b}_{4}, {b}_{5}, {b}_{6}, {b}_{7}, {b}_{8}, {b}_{9}, {b}_{10}, {b}_{11}, {b}_{12}, {b}_{13}, {b}_{14}, {b}_{15}\right] .$

b₀, b₁, b₂, b₃, b₄, b₅, b₆, b₇ are source information bits, and b₈, b₉, b₁₀, b₁₁, b₁₂, b₁₃, b₁₄, b₁₅ are CRC bits.

In this embodiment, the data information B_{L_{B}} may be regarded as first-type information, and the source information bit may be regarded as second-type information.

In this embodiment, a first processing process is performed on each bit bi in the first-type information, such that the first-type information may be converted into fifth-type information.

Exemplarily, the first processing process may use Manchester encoding. A code rate of Manchester encoding is 1/4, and a rule for Manchester encoding includes the following two manners.

Manner I, when bᵢ = 0, code words generated after Manchester encoding are [0, 1, 0, 1]; and when bᵢ = 1, the code words generated after Manchester encoding are [1, 0, 1, 0].

Manner II, when bᵢ = 0, code words generated after Manchester encoding are [1, 0, 1, 0]; and when bᵢ = 1, the code words generated after Manchester encoding are [0, 1, 0, 1].

In this embodiment, the rule for Manchester encoding selects Manner I: when bᵢ = 0, the code words generated after Manchester encoding are [0, 1, 0, 1]; and when bᵢ = 1, the code words generated after Manchester encoding are [1, 0, 1, 0].

In this embodiment, data information generated after the data information B_{_{B}} is subjected to Manchester encoding is C_{L_{C}}, C_{L_{C}} = [c₀, c₁, c₂, ·· ·, c₆₃], and a length of C_{L_{C}} is L_{C} =64. In this embodiment, the data information C_{L_{C}} may be regarded as the fifth-type information.

In this embodiment, the data information B_{L_{B}} is supported to be sent repeatedly for 2 times. A method for performing repeated sending includes the following operations.

Data information C_{L_{C}} generated after each bit bi in B_{L_{B}} is subjected to Manchester encoding is sent in 4 OOK symbols, and then repeatedly sent again in next 4 OOK symbols, thereby completing repeated sending for 2 times. A length of C_{L_{C}} is L_{C}=64, repeated sending is performed for two times, and the data information needs to be carried in a total of 128 OOK symbols for sending.

In this embodiment, the length of the 128 OOK symbols is the same as the length of 32 OFDM symbols or included in the 32 OFDM. A method for calculating the length of one OFDM symbol includes: a length of CP plus the length of the corresponding OFDM symbol, or the length of one OFDM symbol does not include the length of CP.

In this embodiment, each OOK symbol may indicate 2-bit information through carried sequence information. The 2-bit information has 4 different states, which respectively correspond to 4 sequences, such that a sequence carried in each OOK symbol is taken from one of the 4 sequences.

Exemplarily, the sequence may select a ZC sequence. A total of 4 ZC sequences need to be configured, which respectively are [ZC0, ZC1, ZC2, ZC3], each of which indicates one of 4 states of the 2-bit information, for example, the 4 states are [0 0, 0 1, 1 0, 1 1], respectively.

The present disclosure is not limited to the LP-WUS, and may also be applied to an LP-SS, an LP-Preamble, etc.

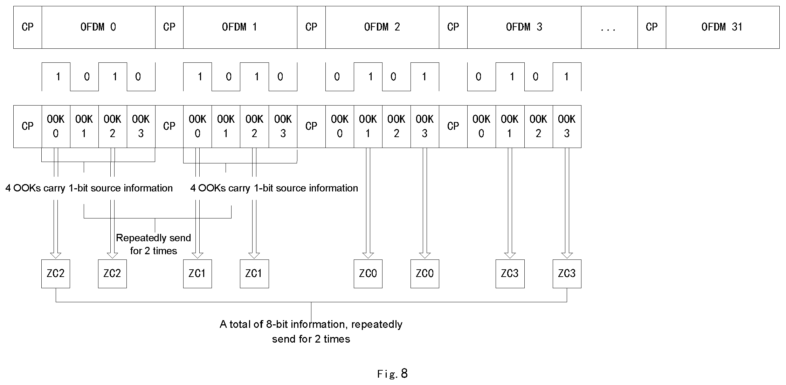

Fig. 8 is a schematic diagram III of 8 OOK symbols carrying 8-bit information according to embodiments of the present disclosure.

In this embodiment, the data information B_{L_{B}} is supported to be sent repeatedly for 2 times. A method for performing repeated sending includes the following operations.

Data information generated after each bit bi in B_{L_{B}} is subjected to Manchester encoding is sent in 4 OOK symbols, and then repeatedly sent again in next 4 OOK symbols, thereby completing repeated sending for 2 times. Then the data information needs to be carried in a total of 128 OOK symbols for sending. In this embodiment, the length of the 128 OOK symbols is the same as the length of 32 OFDM symbols or included in the 32 OFDM.

In this embodiment, the source information bits b₀, b₁, b₂, b₃, b₄, b₅, b₆, b₇ in the data information B_{L_{B}} may also be repeatedly sent for 2 times by using another sending method, and carried in 8 OOK symbols. A specific sending method includes the following.

The 8 OOK symbols are 8 OOK symbols with elements being "1" in the sent data information C_{L_{C}}.

Each of the 8 OOK symbols indicates the 2-bit information through the carried sequence information, and 8-bit information is indicated by 4 OOK symbols. The sequence carried in each OOK symbol is taken from one of the 4 sequences.

A method for performing repeated sending for 2 times includes: the same ZC sequence is repeatedly sent for 2 times by 2 continuous OOK symbols among the 8 OOK symbols, and in this way, a total of 8 OOK symbols are required to send 4 ZC sequences for 2 times.

In this embodiment, the source information bits b₀, b₁, b₂, b₃, b₄, b₅, b₆, b₇ = [1 0 0 1 0 0 1 1] in the data information B_{L_{B}} are subjected to Manchester encoding to obtain data information C_{L_{C}}, elements in the data information C_{L_{C}} carried in 4 OOK symbols corresponding to an OFDM symbol 0 are [1 0 1 0], and data information carried in 4 OOK symbols corresponding to an OFDM symbol 1 is a duplication of the data information C_{L_{C}} carried in the 4 OOK symbols corresponding to the OFDM symbol 0, that is, [1 0 1 0]; and elements in data information C_{L_{C}} carried in 4 OOK symbols corresponding to an OFDM symbol 2 are [1 0 1 0], and data information carried in 4 OOK symbols corresponding to an OFDM symbol 3 is a duplication of the data information C_{L_{C}} carried in 4 OOK symbols corresponding to the OFDM symbol 2, that is [0 1 0 1].

In this embodiment, the 8 OOK symbols configured to carry the source information bits may be 8 OOK symbols with elements being "1" in the above carried data information C_{L_{C}}.

In this embodiment, the source information bits in the data information may be divided into 4 information sets, which are [10], [01], [00], and [11]; each information set includes the 2-bit information; each information set is indicated by one ZC sequence, which respectively are ZC2, ZC1, ZC0, and ZC3; and each information set is carried in one OOK symbol. After each information set is repeatedly sent for two times, a next information set is then sent.

As shown in Fig. 8, ZC sequence indexes carried by OOK0 and OOK2 in a resource corresponding to the OFDM symbol 0 are 2; ZC sequence indexes carried by OOK0 and OOK2 in the resource corresponding to the OFDM symbol 1 are 1; ZC sequence indexes carried by OOK1 and OOK3 in the resource corresponding to the OFDM symbol 2 are 0; and ZC sequence indexes carried by OOK1 and OOK3 in the resource corresponding to the OFDM symbol 3 are 3.

Through the embodiments of the present disclosure, data information may be carried in a symbol of an LP signal, and data transmission is achieved in real time when a main receiver is in a deep sleep state, solving the problem in the related art of an LP-WUS carrying information, thereby further reducing power consumption of a terminal.

### Embodiment 5

In an example of an LP-WUS, the sending of the LP-WUS occupies at least one OFDM symbol, a length L_{B} of data information B_{L_{B}} carried during sending is 16 bits, and the data information may be expressed as: ${B}_{{L}_{B}} = \left[{b}_{0}, {b}_{1}, {b}_{2}, {b}_{3}, {b}_{4}, {b}_{5}, {b}_{6}, {b}_{7}, {b}_{8}, {b}_{9}, {b}_{10}, {b}_{11}, {b}_{12}, {b}_{13}, {b}_{14}, {b}_{15}\right] .$

b₀, b₁, b₂, b₃, b₄, b₅, b₆, b₇ are source information bits, and b₈, b₉, b₁₀, b₁₁, b₁₂, b₁₃, b₁₄, b₁₅ are CRC bits.

In this embodiment, the data information B_{_{B}} may be regarded as first-type information, and the source information bit may be regarded as second-type information.

In this embodiment, a first processing process is performed on each bit bi in the first-type information, such that the first-type information may be converted into fifth-type information.

Exemplarily, the first processing process may use Manchester encoding. A code rate of Manchester encoding is 1/4, and a rule for Manchester encoding includes the following two manners.

Manner I, when bᵢ = 0, code words generated after Manchester encoding are [0, 1, 0, 1]; and when bᵢ = 1, the code words generated after Manchester encoding are [1, 0, 1, 0].

Manner II, when bᵢ = 0, code words generated after Manchester encoding are [1, 0, 1, 0]; and when bᵢ = 1, the code words generated after Manchester encoding are [0, 1, 0, 1].

In this embodiment, the rule for Manchester encoding selects Manner I: when bᵢ = 0, the code words generated after Manchester encoding are [0, 1, 0, 1]; and when bᵢ = 1, the code words generated after Manchester encoding are [1, 0, 1, 0].

In this embodiment, data information generated after the data information B_{L_{B}} is subjected to Manchester encoding is C_{L_{C}} , C_{L_{C}} = [c₀, c₁, c₂, ··· , c₆₃], and a length of C_{L_{C}} is L_{C} =64. In this embodiment, the data information C_{L_{C}} may be regarded as the fifth-type information.

In this embodiment, the data information B_{L_{B}} is supported to be sent repeatedly for 2 times, and a frequency-domain resource occupied by 2 times of repeated sending supports frequency hopping in a frequency domain. A method for performing repeated sending includes the following operations.

Data information generated after each bit bi in B_{L_{B}} is subjected to Manchester encoding is sent in 4 OOK symbols, and then repeatedly sent again in next 4 OOK symbols, but a frequency-domain resource occupied by the 4 OOK symbols is different from that occupied by the previous 4 OOK symbols, such that frequency hopping in the frequency domain is realized, and 2 times of repeated sending is completed. Then the data information needs to be carried in a total of 128 OOK symbols for sending.

In this embodiment, the length of the 128 OOK symbols is the same as the length of 32 OFDM symbols or included in the 32 OFDM.

In this embodiment, each OOK symbol may indicate 2-bit information through carried sequence information. The 2-bit information has 4 different states, which respectively correspond to 4 sequences, such that a sequence carried in each OOK symbol is taken from one of the 4 sequences. In this embodiment, the sequence may select a ZC sequence. A total of 4 ZC sequences need to be configured, which respectively are [ZC0, ZC1, ZC2, ZC3], each of which indicates one of 4 states of the 2-bit information, for example, the 4 states are [0 0, 0 1, 1 0, 1 1], respectively.

The present disclosure is not limited to the LP-WUS, and may also be applied to an LP-SS, an LP-Preamble, etc.

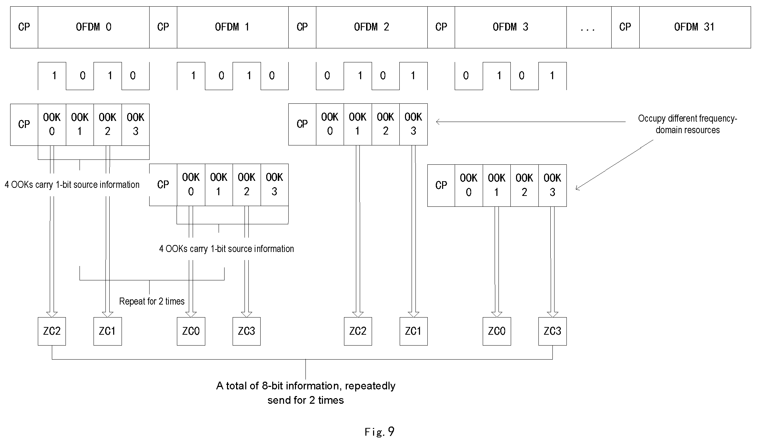

Fig. 9 is a schematic diagram IV of 8 OOK symbols carrying 8-bit information according to embodiments of the present disclosure.

In this embodiment, the data information B_{L_{B}} is supported to be sent repeatedly for 2 times. A method for performing repeated sending includes the following operations.

The 8 OOK symbols are 8 OOK symbols with elements being "1" in the sent data information C_{L_{C}}.

Each of the 8 OOK symbols indicates the 2-bit information through the carried sequence information, and in this way, the 8-bit information may be indicated by 4 OOK symbols. The sequence carried in each OOK symbol is taken from one of the 4 sequences.

A method for performing repeated sending for 2 times includes: all 8-bit information is first sent by the 4 OOK symbols, and then the 8-bit information is repeatedly sent by the remaining 4 OOK symbols.

In this embodiment, the source information bits b₀, b₁, b₂, b₃, b₄, b₅, b₆, b₇ = [1 0 0 1 0 0 1 1] in the data information B_{L_{B}} are subjected to Manchester encoding to obtain data information C_{_{C}}, elements in the data information C_{L_{C}} carried in 4 OOK symbols corresponding to an OFDM symbol 0 are [1 0 1 0], and data information carried in 4 OOK symbols corresponding to an OFDM symbol 1 is a duplication of the data information C_{L_{C}} carried in the 4 OOK symbols corresponding to the OFDM symbol 0, that is, [1 0 1 0]; and elements in data information C_{L_{C}} carried in 4 OOK symbols corresponding to an OFDM symbol 2 are [1 0 1 0], and data information carried in 4 OOK symbols corresponding to an OFDM symbol 3 is a duplication of the data information C_{L_{C}} carried in 4 OOK symbols corresponding to the OFDM symbol 2, that is [0 1 0 1].

In this embodiment, the 8 OOK symbols configured to carry the source information bits may be 8 OOK symbols with elements being "1" in the above carried data information C_{L_{C}}.

In this embodiment, the source information bits may be divided into 4 information sets, which are [10], [01], [00], and [11]; each information set includes the 2-bit information; each information set is indicated by one ZC sequence, which respectively are ZC2, ZC1, ZC0, and ZC3; and each information set is carried in one OOK symbol. In the present disclosure, all the 4 information sets are sent for one time, and then repeatedly send again.

As shown in Fig. 9, a ZC sequence index carried by OOK0 in a resource corresponding to the OFDM symbol 0 is 2; a ZC sequence index carried by OOK2 in the resource corresponding to the OFDM symbol 0 is 1; a ZC sequence index carried by OOK0 in the resource corresponding to the OFDM symbol 1 is 0; a ZC sequence index carried by OOK2 in the resource corresponding to the OFDM symbol 1 is 3; a ZC sequence index carried by OOK1 in a resource corresponding to the OFDM symbol 2 is 2; a ZC sequence index carried by OOK3 in the resource corresponding to the OFDM symbol 2 is 1; a ZC sequence index carried by OOK1 in a resource corresponding to the OFDM symbol 3 is 0; and a ZC sequence index carried by OOK3 in the resource corresponding to the OFDM symbol 3 is 3.

In this embodiment, frequency-domain resources occupied by the OFDM symbols 0 and 2 are the same, frequency-domain resources occupied by the OFDM symbols 1 and 3 are the same, and frequency-domain resources occupied by adjacent two OFDM symbols are different.

Through the embodiments of the present disclosure, data information may be carried in a symbol of an LP signal, and data transmission is achieved in real time when a main receiver is in a deep sleep state, solving the problem in the related art of an LP-WUS carrying information, thereby further reducing power consumption of a terminal.

### Embodiment 6

In an example of an LP-WUS, the sending of the LP-WUS occupies at least one OFDM symbol, a length L_{B} of data information B_{L_{B}} carried during sending is 16 bits, and the data information may be expressed as: ${B}_{{L}_{B}} = \left[{b}_{0}, {b}_{1}, {b}_{2}, {b}_{3}, {b}_{4}, {b}_{5}, {b}_{6}, {b}_{7}, {b}_{8}, {b}_{9}, {b}_{10}, {b}_{11}, {b}_{12}, {b}_{13}, {b}_{14}, {b}_{15}\right] .$

b₀, b₁, b₂, b₃, b₄, b₅, b₆, b₇ are source information bits, and b₈, b₉, b₁₀, b₁₁, b₁₂, b₁₃, b₁₄, b₁₅ are CRC bits.

In this embodiment, the data information B_{L_{B}} may be regarded as first-type information, and the source information bit may be regarded as second-type information.

In this embodiment, a first processing process is performed on each bit bi in the first-type information, such that the first-type information may be converted into fifth-type information.

Exemplarily, the first processing process may use Manchester encoding. A code rate of Manchester encoding is 1/4, and a rule for Manchester encoding includes the following two manners.

Manner I, when bᵢ = 0, code words generated after Manchester encoding are [0, 1, 0, 1]; and when bᵢ = 1, the code words generated after Manchester encoding are [1, 0, 1, 0].

Manner II, when bᵢ = 0, code words generated after Manchester encoding are [1, 0, 1, 0]; and when bᵢ = 1, the code words generated after Manchester encoding are [0, 1, 0, 1].

In this embodiment, the rule for Manchester encoding selects Manner I: when bᵢ = 0, the code words generated after Manchester encoding are [0, 1, 0, 1]; and when bᵢ = 1, the code words generated after Manchester encoding are [1, 0, 1, 0].

In this embodiment, data information generated after the data information B_{_{B}} is subjected to Manchester encoding is C_{L_{C}}, C_{L_{C}} = [c₀, c₁, c₂, ·· ·, c₆₃], and a length of C_{L_{C}} is L_{C} =64. In this embodiment, the data information C_{_{C}} may be regarded as the fifth-type information.

In this embodiment, the data information B_{L_{B}} is supported to be sent repeatedly for 2 times, and a frequency-domain resource occupied by 2 times of repeated sending supports frequency hopping in a frequency domain. A method for performing repeated sending includes the following operations.

Data information generated after each bit bi in B_{L_{B}} is subjected to Manchester encoding is sent in 4 OOK symbols, and then repeatedly sent again in next 4 OOK symbols, but a frequency-domain resource occupied by the 4 OOK symbols is different from that occupied by the previous 4 OOK symbols, such that frequency hopping in the frequency domain is realized, and 2 times of repeated sending is completed. Then the data information needs to be carried in a total of 128 OOK symbols for sending.

In this embodiment, the length of the 128 OOK symbols is the same as the length of 32 OFDM symbols or included in the 32 OFDM.

In this embodiment, each OOK symbol may indicate 2-bit information through carried sequence information. The 2-bit information has 4 different states, which respectively correspond to 4 sequences, such that a sequence carried in each OOK symbol is taken from one of the 4 sequences. In this embodiment, the sequence may select a ZC sequence. A total of 4 ZC sequences need to be configured, which respectively are [ZC0, ZC1, ZC2, ZC3], each of which indicates one of 4 states of the 2-bit information, for example, the 4 states are [0 0, 0 1, 1 0, 1 1], respectively.

The present disclosure is not limited to the LP-WUS, and may also be applied to an LP-SS, an LP-Preamble, etc.

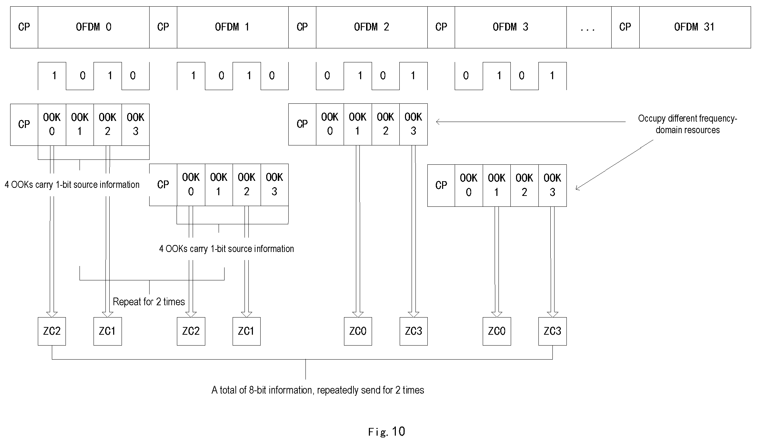

Fig. 10 is a schematic diagram V of 8 OOK symbols carrying 8-bit information according to embodiments of the present disclosure.

In this embodiment, the data information is supported to be sent repeatedly for 2 times. A specific sending method includes the following operations.

The 8 OOK symbols are 8 OOK symbols with elements being "1" in the sent data information C_{L_{C}}.

One of the 8 OOK symbols indicates the 2-bit information through the carried sequence information, and in this way, the 8-bit information may be indicated by 4 OOK symbols. The sequence carried in each OOK symbol is taken from one of the 4 sequences.

A method for performing repeated sending for 2 times includes: 4 OOK symbols are required for sending the 8-bit information; the 4 OOK symbols are first divided into 2 OOK symbol sets, which are defined as an OOK symbol set 1 and an OOK symbol set 2; and then the OOK symbol set 1 and the OOK symbol set 2 are repeatedly sent for 2 times.

In this embodiment, the source information bits b₀, b₁, b₂, b₃, b₄, b₅, b₆, b₇ = [1 0 0 1 0 0 1 1] in the data information B_{L_{B}} are subjected to Manchester encoding to obtain data information C_{L_{C}}, elements in the data information C_{L_{C}} carried in 4 OOK symbols corresponding to an OFDM symbol 0 are [1 0 1 0], and data information carried in 4 OOK symbols corresponding to an OFDM symbol 1 is a duplication of the data information C_{L_{C}} carried in the 4 OOK symbols corresponding to the OFDM symbol 0, that is, [1 0 1 0]; and elements in data information C_{L_{C}} carried in 4 OOK symbols corresponding to an OFDM symbol 2 are [1 0 1 0], and data information carried in 4 OOK symbols corresponding to an OFDM symbol 3 is a duplication of the data information C_{L_{C}} carried in 4 OOK symbols corresponding to the OFDM symbol 2, that is [0 1 0 1].

In this embodiment, the 8 OOK symbols configured to carry the source information bits may be 8 OOK symbols with elements being "1" in the above carried data information C_{L_{C}}.

In this embodiment, the source information bits may be divided into 4 information sets, which are [10], [01], [00], and [11]; each information set includes the 2-bit information; each information set is indicated by one ZC sequence, which respectively are ZC2, ZC1, ZC0, and ZC3; and each information set is carried in one OOK symbol. Correspondingly, the order of sequences sent repeatedly for two times is: ZC2, ZC1, ZC2, ZC1, ZC0, ZC3, ZC0, and ZC3.

In this embodiment, 4 OOK symbols may be divided into 2 OOK symbol sets, which respectively are an OOK symbol set 1 including 2 OOK symbols that carry the ZC2 and the ZC1, and an OOK symbol set 2 including 2 OOK symbols that carry the ZC0 and the ZC3.

As shown in Fig. 10, a ZC sequence index carried by OOK0 in a resource corresponding to the OFDM symbol 0 is 2; a ZC sequence index carried by OOK2 in the resource corresponding to the OFDM symbol 0 is 1; a ZC sequence index carried by OOK0 in the resource corresponding to the OFDM symbol 1 is 2; a ZC sequence index carried by OOK2 in the resource corresponding to the OFDM symbol 1 is 1; a ZC sequence index carried by OOK1 in a resource corresponding to the OFDM symbol 2 is 0; a ZC sequence index carried by OOK3 in the resource corresponding to the OFDM symbol 2 is 3; a ZC sequence index carried by OOK1 in a resource corresponding to the OFDM symbol 3 is 0; and a ZC sequence index carried by OOK3 in the resource corresponding to the OFDM symbol 3 is 3.

Through the embodiments of the present disclosure, data information may be carried in a symbol of an LP signal, and data transmission is achieved in real time when a main receiver is in a deep sleep state, solving the problem in the related art of an LP-WUS carrying information, thereby further reducing power consumption of a terminal.

### Embodiment 7

In an example of an LP-WUS, the sending of the LP-WUS occupies at least one OFDM symbol, a length L_{B} of data information B_{L_{B}} carried during sending is 16 bits, and the data information may be expressed as: ${B}_{{L}_{B}} = \left[{b}_{0}, {b}_{1}, {b}_{2}, {b}_{3}, {b}_{4}, {b}_{5}, {b}_{6}, {b}_{7}, {b}_{8}, {b}_{9}, {b}_{10}, {b}_{11}, {b}_{12}, {b}_{13}, {b}_{14}, {b}_{15}\right] .$

b₀, b₁, b₂, b₃, b₄, b₅, b₆, b₇ are source information bits, and b₈, b₉, b₁₀, b₁₁, b₁₂, b₁₃, b₁₄, b₁₅ are CRC bits.

In this embodiment, the data information B_{LB} may be regarded as first-type information, and the source information bit may be regarded as second-type information.

In this embodiment, a first processing process is performed on each bit bi in the first-type information, such that the first-type information may be converted into fifth-type information.

Exemplarily, the first processing process may use Manchester encoding. A code rate of Manchester encoding is 1/4, and a rule for Manchester encoding includes the following two manners.

Manner I, when bᵢ = 0, code words generated after Manchester encoding are [0, 1, 0, 1]; and when bᵢ = 1, the code words generated after Manchester encoding are [1, 0, 1, 0].

Manner II, when bᵢ = 0, code words generated after Manchester encoding are [1, 0, 1, 0]; and when bᵢ = 1, the code words generated after Manchester encoding are [0, 1, 0, 1].

In this embodiment, the rule for Manchester encoding selects Manner I: when bᵢ = 0, the code words generated after Manchester encoding are [0, 1, 0, 1]; and when bᵢ = 1, the code words generated after Manchester encoding are [1, 0, 1, 0].

In this embodiment, data information generated after the data information B_{LB} is subjected to Manchester encoding is C_{L_{C}} , C_{L_{C}} = [c₀, c₁, c₂, ··· , c₆₃], and a length of C_{LC} is L_{C} =64. In this embodiment, the data information C_{L_{C}} may be regarded as the fifth-type information.

In this embodiment, the data information B_{L_{B}} is supported to be sent repeatedly for 2 times, and a frequency-domain resource occupied by 2 times of repeated sending supports frequency hopping in a frequency domain. A method for performing repeated sending includes the following operations.

Data information C_{L_{C}} generated after B_{L_{B}} is subjected to Manchester encoding are all sent, repeated information of the data information C_{L_{C}} is then sent, and frequency-domain resources occupied by the sending of this repeated information are different, such that frequency hopping in the frequency domain is realized, and 2 times of repeated sending is completed. The data information needs to be carried in a total of 128 OOK symbols for sending.

In this embodiment, the length of the 128 OOK symbols is the same as the length of 32 OFDM symbols or included in the 32 OFDM.

In this embodiment, each OOK symbol may indicate 2-bit information through carried sequence information. The 2-bit information has 4 different states, which respectively correspond to 4 sequences, such that a sequence carried in each OOK symbol is taken from one of the 4 sequences. In this embodiment, the sequence may select a ZC sequence. A total of 4 ZC sequences need to be configured, which respectively are [ZC0, ZC1, ZC2, ZC3], each of which indicates one of 4 states of the 2-bit information, for example, the 4 states are [0 0, 0 1, 1 0, 1 1], respectively.

The present disclosure is not limited to the LP-WUS, and may also be applied to an LP-SS, an LP-Preamble, etc.

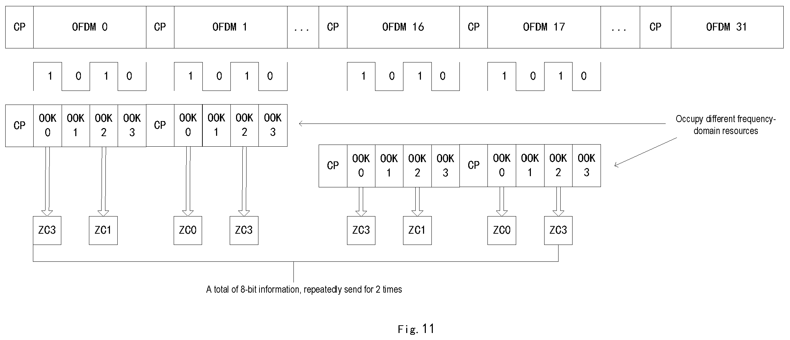

Fig. 11 is a schematic diagram VI of 8 OOK symbols carrying 8-bit information according to embodiments of the present disclosure.

In this embodiment, the source information bits b₀, b₁, b₂, b₃, b₄, b₅, b₆, b₇ in the data information B_{L_{B}} may also be repeatedly sent for 2 times, and carried in 8 OOK symbols. A specific sending method includes the following.

The 8 OOK symbols are 8 OOK symbols with elements being "1" in the sent data information C_{L_{C}}.

Each of the 8 OOK symbols indicates the 2-bit information through the carried sequence information, and 8-bit information is indicated by 4 OOK symbols. The sequence carried in each OOK symbol is taken from one of the 4 sequences.

A method for performing repeated sending for 2 times includes: the first 4 OOK symbols among the 8 OOK symbols are located in the OOK symbols occupied by the sending the data information C_{_{C}} that is generated after B_{L_{B}} is subjected to Manchester encoding. The last 4 OOK symbols among the 8 OOK symbols are located in the OOK symbols occupied by the repeated sending of the data information C_{_{C}}. The repeated sending of the data information C_{L_{C}} refers to completely sending the data information C_{L_{C}} repeatedly for two times.

In this embodiment, the source information bits b₀, b₁, b₂, b₃, b₄, b₅, b₆, b₇ = [1 1 0 1 0 0 1 1] in the data information B_{L_{B}} are subjected to Manchester encoding to obtain data information C_{L_{C}}, elements in the data information C_{L_{C}} carried in 4 OOK symbols corresponding to an OFDM symbol 0 are [1 0 1 0], and elements in the data information C_{L_{C}} carried in 4 OOK symbols corresponding to an OFDM symbol 1 are [1 0 1 0]. Since the data information C_{L_{C}} is sent repeatedly for two times, OFDM symbols 16 and 17 respectively are duplications for the data information C_{L_{C}} carried in the OFDM symbols 0 and 1.

In this embodiment, the 8 OOK symbols configured to carry the source information bits may be 8 OOK symbols with elements being "1" in the above carried data information C_{L_{C}}.

In this embodiment, the source information bits may be divided into 4 information sets, which are [11], [01], [00], and [11]; each information set includes the 2-bit information; each information set is indicated by one ZC sequence, which respectively are ZC3, ZC1, ZC0, and ZC3; and each information set is carried in one OOK symbol.

As shown in Fig. 11, a ZC sequence index carried by OOK0 in a resource corresponding to the OFDM symbol 0 is 3; a ZC sequence index carried by OOK2 in the resource corresponding to the OFDM symbol 0 is 1; a ZC sequence index carried by OOK0 in the resource corresponding to the OFDM symbol 1 is 0; a ZC sequence index carried by OOK2 in the resource corresponding to the OFDM symbol 1 is 3; a ZC sequence index carried by OOK0 in a resource corresponding to the OFDM symbol 16 is 3; a ZC sequence index carried by OOK2 in the resource corresponding to the OFDM symbol 16 is 1; a ZC sequence index carried by OOK0 in a resource corresponding to the OFDM symbol 17 is 0; and a ZC sequence index carried by OOK2 in the resource corresponding to the OFDM symbol 17 is 3.

Through the embodiments of the present disclosure, data information may be carried in a symbol of an LP signal, and data transmission is achieved in real time when a main receiver is in a deep sleep state, solving the problem in the related art of an LP-WUS carrying information, thereby further reducing power consumption of a terminal.

In some embodiments, in addition to the above data information B_{L_{B}}, the target information may further include first indication information, that is, the first indication information may be sent by an LP-WUS. Further, the first indication information is sent before the above data information B_{L_{B}}.

In some embodiments, the above data information B_{L_{B}} and/or the first indication information may also be sent via an LP-Preamble or an LP-SS. Further, the first indication information is sent before the above data information B_{L_{B}}.

In some embodiments, the sending manner for the data information B_{L_{B}} in any one of the above embodiments may also be used for the sending of the first indication information.

In an example of the sending manner for the data information B_{L_{B}} in Embodiment 1, the manner of sending the data information B_{L_{B}} using the LP-Preamble is specifically described, as shown in Embodiment 8 and Embodiment 9. However, the present disclosure is not limited thereto.

### Embodiment 8

In an example of an LP-Preamble, the sending of the LP-Preamble occupies at least one OFDM symbol, and sequence information carried during the sending of the LP-Preamble may be expressed as V_{L_{V}} = [v₀, v₁, v₂, v₃, v₄, v₅, v₆, v₇].

In this embodiment, Manchester encoding may be performed on each bit vi in V_{L_{V}}, a code rate of Manchester encoding is 1/4, and a rule for Manchester encoding includes the following two manners.

Manner I, when vᵢ = 0, code words generated after Manchester encoding are [0, 1, 0, 1]; and when vᵢ = 1, the code words generated after Manchester encoding are [1, 0, 1, 0].

Manner II, when vᵢ = 0, code words generated after Manchester encoding are [1, 0, 1, 0]; and when vᵢ = 1, the code words generated after Manchester encoding are [0, 1, 0, 1].

In this embodiment, the rule for Manchester encoding selects Manner I: when vᵢ = 0, the code words generated after Manchester encoding are [0, 1, 0, 1]; and when vᵢ = 1, the code words generated after Manchester encoding are [1, 0, 1, 0].

In this embodiment, sequence information generated after the data information V_{L_{V}} is subjected to Manchester encoding is U_{L_{U}}, U_{L_{U}} = [u₀, u₁, u₂, ··· , u₃₁], and a length of U_{L_{U}} is L_{U}=32.

In this embodiment, one element in the data information U_{L_{U}} is carried in one OOK symbol for sending. Moreover, in this embodiment, a time-domain length occupied by 4 OOK symbols is the same as a length of one OFDM symbol or included in the OFDM symbol. The data information U_{L_{U}} needs to be carried in 32 OOK symbols for sending. In this embodiment, the length of the 32 OOK symbols is the same as the length of 8 OFDM symbols or included in the 8 OFDM. A method for calculating the length of one OFDM symbol includes: a length of CP plus the length of the corresponding OFDM symbol, or the length of one OFDM symbol does not include the length of CP.

In this embodiment, the source information bits b₀, b₁, b₂, b₃, b₄, b₅, b₆, b₇ in the data information B_{_{B}} may be carried in 4 OOK symbols for sending and not be send repeatedly. A specific sending method includes the following.

The 4 OOK symbols are 4 OOK symbols with elements being "1" in the sent data information U_{L_{U}}.

Each of the 4 OOK symbols may indicate the 2-bit information through the carried sequence information. In this way, the 4 OOK symbols may indicate 8-bit information. The 2-bit information has 4 different states, which respectively correspond to 4 sequences, such that a sequence carried in each OOK symbol is taken from one of the 4 sequences.

In this embodiment, elements in the data information U_{L_{U}} carried in 4 OOK symbols carried in an OFDM symbol 0 are [1 0 1 0], and elements in the data information U_{L_{U}} carried in 4 OOK symbols carried in an OFDM symbol 1 are [0 1 0 1]. In this embodiment, source information bits b₀, b₁, b₂, b₃, b₄, b₅, b₆, b₇ in the data information B_{L_{B}} are carried by 4 OOK symbols with elements being "1" in the above carried U_{L_{U}}, as shown in Fig. 5.

In this embodiment, the data information B_{L_{B}} may be WUS information or first indication information. Exemplarily, the source information bits in the data information B_{L_{B}} in this embodiment are b₀, b₁, b₂, b₃, b₄, b₅, b₆, b₇ = [1 0 0 1 0 0 1 1].

In this embodiment, the source information bits in the data information B_{L_{B}} may be divided into 4 information sets, which are [10], [01], [00], and [11]; each information set includes the 2-bit information; each information set is indicated by one ZC sequence, which respectively are ZC2, ZC1, ZC0, and ZC3; and each information set is carried in one OOK symbol.

As shown in Fig. 5, a ZC sequence index carried by OOK0 in a resource corresponding to the OFDM symbol 0 is 2; a ZC sequence index carried by OOK2 in the resource corresponding to the OFDM symbol 0 is 1; a ZC sequence index carried by OOK1 in a resource corresponding to the OFDM symbol 1 is 0; and a ZC sequence index carried by OOK3 in the resource corresponding to the OFDM symbol 1 is 3.

Through the embodiments of the present disclosure, data information may be carried in a symbol of an LP signal, and data transmission is achieved in real time when a main receiver is in a deep sleep state, solving the problem in the related art of an LP-WUS carrying information, thereby further reducing power consumption of a terminal.

### Embodiment 9

In an example of an LP-Preamble, the sending of the LP-Preamble occupies at least one OFDM symbol, and sequence information carried during the sending of the LP-Preamble may be expressed as: ${V}_{{L}_{V}} = \left[{v}_{0}, {v}_{1}, {v}_{2}, {v}_{3}, {v}_{4}, {v}_{5}, {v}_{6}, {v}_{7}\right] .$

In this embodiment, bits in the sequence information V_{L_{V}} may not be subjected to Manchester encoding.

In this embodiment, one element in the sequence information V_{L_{V}} is carried in one OOK symbol for sending. Moreover, in this embodiment, a time-domain length occupied by 4 OOK symbols is the same as a length of one OFDM symbol or included in the OFDM symbol. The sequence information V_{L_{V}} needs to be carried in 8 OOK symbols for sending. In this embodiment, the length of the 8 OOK symbols is the same as the length of 2 OFDM symbols or included in the 2 OFDM. A method for calculating the length of one OFDM symbol includes: a length of CP plus the length of the corresponding OFDM symbol, or the length of one OFDM symbol does not include the length of CP.

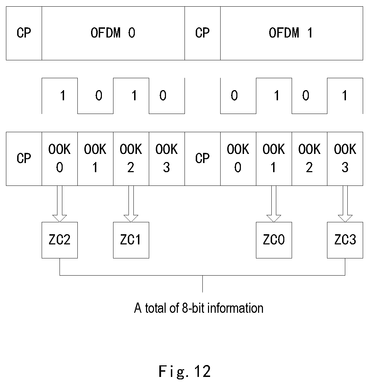

Fig. 12 is a schematic diagram II of 4 OOK symbols carrying 8-bit information according to embodiments of the present disclosure. As shown in Fig. 12, the source information bits b₀, b₁, b₂, b₃, b₄, b₅, b₆, b₇ in the data information B_{L_{B}} may be carried in 4 OOK symbols for sending and not be send repeatedly. A specific sending method includes the following.

The 4 OOK symbols are 4 OOK symbols with elements being "1" in the sent sequence information V_{L_{V}}.

Each of the 4 OOK symbols may indicate the 2-bit information through the carried sequence information. In this way, the 4 OOK symbols may indicate 8-bit information. The 2-bit information has 4 different states, which respectively correspond to 4 sequences, such that a sequence carried in each OOK symbol is taken from one of the 4 sequences.

In this embodiment, the data information B_{L_{B}} may be WUS information or first indication information.

In this embodiment, elements in the sequence information V_{L_{V}} carried in 4 OOK symbols carried in an OFDM symbol 0 are [1 0 1 0], and elements in the sequence information V_{L_{V}} carried in 4 OOK symbols carried in an OFDM symbol 1 are [0 1 0 1]. In this embodiment, source information bits b₀, b₁, b₂, b₃, b₄, b₅, b₆, b₇ in the data information B_{L_{B}} are carried by 4 OOK symbols with elements being "1" in the above carried sequence information V_{L_{V}}, as shown in Fig. 12.

In this embodiment, the source information bits in the data information B_{L_{B}} in this embodiment are b₀, b₁, b₂, b₃, b₄, b₅, b₆, b₇ = [1 0 0 1 0 0 1 1].

Further, the source information bits in the data information B_{L_{B}} may be divided into 4 information sets, which are [10], [01], [00], and [11]; each information set includes the 2-bit information; each information set is indicated by one ZC sequence, which respectively are ZC2, ZC1, ZC0, and ZC3; and each information set is carried in one OOK symbol.

As shown in Fig. 12, a ZC sequence index carried by OOK0 in a resource corresponding to the OFDM symbol 0 is 2; a ZC sequence index carried by OOK2 in the resource corresponding to the OFDM symbol 0 is 1; a ZC sequence index carried by OOK1 in a resource corresponding to the OFDM symbol 1 is 0; and a ZC sequence index carried by OOK3 in the resource corresponding to the OFDM symbol 1 is 3.

The present disclosure is not limited to the LP-Preamble, and may also be applied to an LP-SS.

Through the embodiments of the present disclosure, data information may be carried in a symbol of an LP signal, and data transmission is achieved in real time when a main receiver is in a deep sleep state, solving the problem in the related art of an LP-WUS carrying information, thereby further reducing power consumption of a terminal.

In some other embodiments, the information bits in the data information B_{L_{B}} may be sent in at least one of the following: LP-SS, LP-Preamble, or LP-WUS.

Further, in a case of being sent in at least 2 structures above, the information bits in the data information B_{L_{B}} need to be divided into corresponding several portions, and each portion is sent in one structure.

Exemplarily, if first-type information is sent via two structures of LP-Preamble and LP-WUS, the first-type information may be first divided into second-type information and third-type information, then the second-type information is sent by the LP-Preamble, and the third-type information is sent by the LP-WUS.

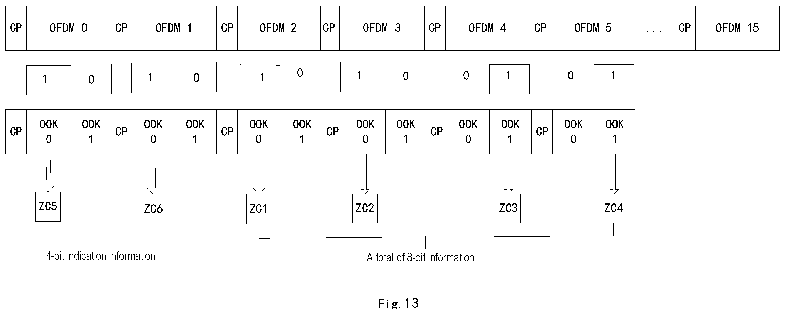

Fig. 13 is a schematic diagram of a manner of sending target information including indication information according to embodiments of the present disclosure. As shown in Fig. 13, the target information may include first indication information and the above data information.

In this embodiment, the first indication information is sent by the LP-SS and the LP-Preamble, and the data information B_{L_{B}} is sent by the LP-WUS.

In this embodiment, the first indication information is sent before the data information B_{L_{B}}. The manner of sending the first indication information or the data information B_{L_{B}} may be referred to any one of the above sending methods, and the sending manners for the first indication information and the data information may the same or different, and are not described herein again.

In this embodiment, the first indication information may be configured to indicate position information of an element of OOK=1 used when the LP-WUS is sent.

As shown in Fig. 13, sequences ZC5 and ZC6 are indication information, and each sequence may carry 2-bit information, such that 4-bit indication information may be obtained. The 4-bit indication information may be configured to indicate the position information of the element of OOK=1 occupied when the subsequent LP-WUS is sent. Exemplarily, the LP-WUS may carry 8-bit source information. Specific information carrying rules and sending manners may be referred to any one of the above method embodiments, and are not described herein again.

Embodiments of the present disclosure further provide a computer-readable storage medium. The computer-readable storage medium stores a computer program. Steps in any one of the above method embodiments are executed when the computer program is run by a processor.

In an exemplary embodiment, the computer-readable storage medium may include, but is not limited to, a USB flash disk, a Read-Only Memory (ROM), a Random Access Memory (RAM), and various media that can store computer programs, such as a mobile hard disk, a magnetic disk, or an optical disk.

An embodiment of the present disclosure further provides an electronic apparatus. The electronic apparatus includes a memory and a processor. The memory is configured to store a computer program. The processor is configured to run the computer program to execute steps in any one of method embodiments described above.

In an exemplary embodiment, the electronic apparatus may further include a transmission device and an input/output device. The transmission device is connected to the processor. The input/output device is connected to the processor.

An embodiment of the present disclosure further provides a computer program product, including a computer program. The computer program, when run by a processor, performs steps of any one of the above method embodiments.

For specific examples in this embodiment, refer to the examples described in the foregoing embodiments and the exemplary implementations, and this embodiment will not be repeated thereto.

It is apparent that those skilled in the art should understand that the above mentioned modules or steps of the present disclosure may be implemented by a general computing device, and may also be gathered together on a single computing device or distributed in network composed of multiple computing devices. The above mentioned modules or steps of the present disclosure may be implemented with program codes executable by the computing device, so that may be stored in a storage device for execution by the computing device, and in some cases, the steps shown or described may be performed in a different sequence than herein, or can be fabricated into individual integrated circuit modules respectively, or multiple modules or steps thereof are fabricated into a single integrated circuit module for implementation. In this way, the present disclosure are not limited to any specific combination of hardware and software.

The above are only the exemplary embodiments of the present disclosure and are not intended to limit the present disclosure. For those skilled in the art, the present disclosure may have various modifications and variations. Any modifications, equivalent replacements, improvements and the like made within the principle of the disclosure shall fall within the scope of protection of the present disclosure.

## Claims

1. An information sending method, comprising:
sending a target signal carrying target information, wherein the target signal occupies at least one target symbol in a time domain.

2. The method according to claim 1, wherein the target symbol comprises at least one of the following: a On-Off Keying (OOK) symbol, a Multi-Carrier On-Off Keying (MC-OOK) symbol, a Frequency-Shift Keying (FSK) symbol, a Multi-Carrier Frequency-Shift Keying (MC-FSK) symbol, or an Orthogonal Frequency Division Multiplexing (OFDM) symbol.

3. The method according to claim 1, wherein the target information comprises at least one of the following:
first-type information;
second-type information, wherein the second-type information refers to a portion of information in the first-type information;
third-type information, wherein the third-type information refers to a portion of information in the first-type information that is different from the second-type information;
fourth-type information, wherein the fourth-type information refers to information different from the first-type information; or
first indication information.

4. The method according to claim 3, wherein the first-type information comprises at least one of the following: information for a first sequence, information for a second sequence, or Wake-Up Signal (WUS) information.

5. The method according to claim 3, wherein the first indication information is configured to indicate at least one of the following:
position information of a second number of target symbols in a first number of target symbols;
a size of a load for the first-type information;
a size of a load for the second-type information;
value information of the second number;
the number of bits or elements comprised in an information set;
the number of states corresponding to the bits or elements comprised in the information set;
the number of third sequences required for the states corresponding to the bits or elements comprised in the information set;
whether the second-type information or sixth-type information comprises Cyclic Redundancy Check (CRC) information and/or padding information;
whether the second-type information or sixth-type information is repeatedly sent;
the number of times for repeatedly sending the second-type information or sixth-type information;
whether the second-type information or sixth-type information is sent in a frequency hopping manner; or
a frequency hopping sending pattern of the second-type information or sixth-type information.

6. The method according to claim 5, wherein the position information comprises at least one of the following:
initial position information of one or more regions in a first number of target symbols, wherein the first number of target symbols are divided into a plurality of regions;
cutoff position information of the one or more regions in the first number of target symbols, wherein the first number of target symbols are divided into a plurality of regions;
indication information for the one or more regions; or
symbol index information of the second number of target symbols.

7. The method according to claim 1, wherein the target signal comprises at least one of the following:
a first-type signal, wherein the first-type signal occupies a first number of target symbols in the time domain, and is configured to send first-type information;
a second-type signal, wherein the second-type signal occupies a second number of target symbols in the time domain, and is configured to send second-type information; or
a third-type signal, wherein the third-type signal occupies a third number of target symbols in the time domain, and is configured to send first indication information.

8. The method according to claim 7, wherein the first-type signal comprises at least one of the following: a first signal, a second signal, or a third signal.

9. The method according to claim 7, wherein the second-type signal is generated according to a third sequence.

10. The method according to claim 7, wherein
the second number of target symbols refers to part or all of target symbols in the first number of target symbols.

11. The method according to claim 10, wherein
the second number of target symbols refers to part or all of target symbols of which bits or elements in first-type information sent in the first number of target symbols are 1; or
the second number of target symbols refers to part or all of target symbols of which bits or elements in fifth-type information sent in the first number of target symbols are 1; or
the second number of target symbols refers to part or all of target symbols of which bits or elements in the first-type information sent in the first number of target symbols are 1, wherein at least one bit or at least one element in the first-type information is sent in each target symbol; or the second number of target symbols refers to part or all of target symbols of which bits or elements in the fifth-type information sent in the first number of target symbols are 1, wherein at least one bit or at least one element in the fifth-type information is sent in each target symbol; the fifth-type information is generated from the first-type information through a first processing process; and the first processing process comprises at least one of the following: chunking, repetition, bit-level repetition, source coding, channel coding, modulation, interleaving, padding bit addition, CRC bit addition, or rate matching.

12. The method according to claim 9, before sending the target signal carrying the target information, the method further comprises:
dividing the second-type information into at least one information set in a case where the target information comprises the second-type information, wherein each information set comprises at least one bit or at least one element in the second-type information; or
in a case where the target information comprises the second-type information, processing the second-type information through a second processing process to generate sixth-type information, and dividing the sixth-type information into the at least one information set, wherein each information set comprises at least one bit or at least one element in the sixth-type information, and the second processing process comprises at least one of the following: chunking, repetition, bit-level repetition, source coding, channel coding, modulation, interleaving, padding bit addition, CRC bit addition, or rate matching.

13. The method according to claim 12, sending the target signal carrying the target information comprises:
sending, to the second number of target symbols, the second-type signal carrying the at least one information set, wherein each information set is carried in one target symbol for sending.

14. The method according to claim 13, before sending the target signal carrying the target information, the method further comprises:
determining, according to a first principle, a third sequence corresponding to information content in the information set, wherein the third sequence is configured to indicate information carried in the information set.

15. The method according to claim 14, wherein the first principle comprises at least one of the following:
the third sequences sent in the plurality of target symbols being the same, in a case where the information content in the plurality of information set is the same;
determining, according to a first rule, the third sequences sent in the plurality of target symbols, in a case where the information content in the plurality of information set is the same;
determining, at least according to an index of the target symbol, the third sequence sent in the target symbol; or
determining, at least according to a relative position or relative index of the target symbol in the second number of target symbols, the third sequence sent in the target symbol.

16. The method according to claim 15, before sending the target signal carrying the target information, the method further comprises:
configuring scrambling codes for the third sequences sent in the plurality of target symbols, in a case where the third sequences sent in the plurality of target symbols are the same.

17. The method according to claim 12, wherein, in a case where the number R of times for repeatedly sending the second-type information or sixth-type information is greater than 1, sending the target signal carrying the target information comprises at least one of the following:
repeatedly sending each information set in the second-type information or sixth-type information in sequence for R times; or
sending each information set in the second-type information or sixth-type information in sequence, and repeating this process for R times.

18. The method according to claim 17, wherein, in a case where each information set in the second-type information or sixth-type information is repeatedly sent in sequence for R times, the third sequences sent in R target symbols occupied by each information set are the same, and/or the R target symbols occupied by each information are continuous in the time domain, and/or scrambling codes configured in the R target symbols occupied by each information are the same.

19. The method according to claim 7, wherein the third-type signal is generated according to a fourth sequence; and the third-type signal carries the first indication information.

20. The method according to claim 7, wherein
the third number of target symbols refers to part or all of target symbols in the first number of target symbols.

21. The method according to claim 20, wherein
the third number of target symbols refers to part or all of target symbols of which bits or elements in the first-type information sent in the first number of target symbols are 1; or
the third number of target symbols refers to part or all of target symbols of which bits or elements in fifth-type information sent in the first number of target symbols are 1; or
the third number of target symbols refers to part or all of target symbols of which bits or elements in the first-type information sent in the first number of target symbols are 1, wherein at least one bit or at least one element in the first-type information is sent in each target symbol; or
the third number of target symbols refers to part or all of target symbols of which bits or elements in the fifth-type information sent in the first number of target symbols are 1, wherein at least one bit or at least one element in the fifth-type information is sent in each target symbol;
the fifth-type information is generated from the first-type information through a first processing process; and the first processing process comprises at least one of the following: chunking, repetition, bit-level repetition, source coding, channel coding, modulation, interleaving, padding bit addition, CRC bit addition, or rate matching.

22. The method according to claim 7, wherein
the third number of target symbols is located before the second number of target symbols, in a case where the first number of target symbols comprises the second number of target symbols and the third number of target symbols.

23. The method according to claim 19, before sending the target signal carrying the target information, the method further comprises:
dividing the first indication information into at least one information set in a case where the target information comprises the first indication information, wherein each information set comprises at least one bit or at least one element in the first indication information; or
in a case where the target information comprises the first indication information, processing the first indication information through a third processing process to generate seventh-type information, and dividing the seventh-type information into the at least one information set, wherein each information set comprises at least one bit or at least one element in the seventh-type information, and the third processing process comprises at least one of the following: chunking, repetition, bit-level repetition, source coding, channel coding, modulation, interleaving, padding bit addition, CRC bit addition, or rate matching.

24. The method according to claim 23, sending the target signal carrying the target information comprises:
sending, to the third number of target symbols, the third-type signal carrying the at least one information set, wherein each information set is carried in one target symbol for sending.

25. The method according to claim 24, before sending the target signal carrying the target information, the method further comprises:
determining, according to a second principle, a fourth sequence corresponding to information content in the information set, wherein the fourth sequence is configured to indicate information carried in the information set.

26. The method according to claim 25, wherein the second principle comprises at least one of the following:
the fourth sequences sent in the plurality of target symbols being the same, in a case where the information content in the plurality of information set is the same;
determining, according to a second rule, the fourth sequences sent in the plurality of target symbols, in a case where the information content in the plurality of information set is the same;
determining, according to an index of the target symbol, the fourth sequence sent in the target symbol; or
determining, according to a relative position or relative index of the target symbol in the third number of target symbols, the fourth sequence sent in the target symbol.

27. The method according to claim 26, before sending the target signal carrying the target information, the method further comprises:
configuring scrambling codes for the fourth sequences sent in the plurality of target symbols, in a case where the fourth sequences sent in the plurality of target symbols are the same.

28. The method according to claim 23, wherein, in a case where the number R of times for repeatedly sending the first indication information or seventh-type information is greater than 1, sending the target signal carrying the target information comprises at least one of the following:
repeatedly sending each information set in the first indication information or seventh-type information in sequence for R times; or
sending each information set in the first indication information or seventh-type information in sequence, and repeating this process for R times.

29. The method according to claim 28, wherein, in a case where each information set in the first indication information or seventh-type information is repeatedly sent in sequence for R times, the fourth sequences sent in R target symbols occupied by each information set are the same, and/or the R target symbols occupied by each information are continuous in the time domain, and/or scrambling codes configured in the R target symbols occupied by each information are the same.

30. The method according to claim 1, further comprising:
indicating and monitoring activation or deactivation of the target signal through Downlink Control Information (DCI).

31. A computer-readable storage medium, having a computer program stored therein, wherein the computer program, when run by a processor, performs the method according to any one of claims 1 to 30.

32. An electronic apparatus, comprising a memory and a processor, wherein the memory stores a computer program; and the processor is configured to run the computer program to perform the method according to any one of claims 1 to 30.

33. A computer program product, comprising a computer program, wherein the computer program, when executed by a processor, performs steps of the method according to any one of claims 1 to 30.
